# EUROPEAN PATENT APPLICATION

(11) **EP 4 556 747 A1**
(43) Date of publication of application: **21.05.2025**
(21) Application number: 23871387.9
(22) Date of filing: 18.07.2023
(51) Int. Cl.: F16H 3/54, F16H 3/66

(54) **TRANSMISSION, AND VEHICULAR DRIVE TRANSMISSION DEVICE PROVIDED WITH SAME**

(30) Priority: 27.09.2022 JP 2022153925
(71) Applicant: AISIN CORPORATION, Kariya-shi, Aichi 448-8650 (JP)
(72) Inventor: ISONO Hiroshi, Kariya-shi, Aichi 448-8650 (JP)
(74) Representative: Kramer Barske Schmidtchen Patentanwälte PartG mbB
(86) International application number: PCT/JP2023/026241
(87) International publication number: WO 2024/070143

(57) **Abstract**

A first fixing device (2) includes a first fixed gear (21) that rotates integrally with a first stationary element (13) of a planetary gear mechanism (1), a first fixing gear (22) that meshes with the first fixed gear (21), and a first friction engagement device (4) that selectively engages the first fixing gear (22) with a non-rotary member (NR). A second fixing device (3) includes a second fixed gear (31) that rotates integrally with a second stationary element (14) of the planetary gear mechanism (1), a second fixing gear (32) that meshes with the second fixed gear (31), and a second friction engagement device (5) that selectively engages the second fixing gear (32) with the non-rotary member (NR). The first friction engagement device (4) is disposed coaxially with the first fixing gear (22). The second friction engagement device (5) is disposed coaxially with the second fixing gear (32). A rotation axis of the first fixing gear (22) and a rotation axis of the second fixing gear (32) are parallel to each other. The first friction engagement device (4) and the second friction engagement device (5) are disposed so as not to overlap each other in an axial view along an axial direction (L).

## Description

### TECHNICAL FIELD

The present invention relates to a transmission including: a planetary gear mechanism including an input element drivingly connected to a drive source for a wheel, an output element drivingly connected to the wheel, a first stationary element, and a second stationary element; a first fixing device that selectively fixes the first stationary element to a non-rotary member; and a second fixing device that selectively fixes the second stationary element to the non-rotary member, and a vehicle drive transmission device including the transmission.

### BACKGROUND ART

An example of such a technology is disclosed in Patent Document 1 below. In the following description of the background art, signs used in Patent Document 1 are shown in parentheses.

In a transmission of Patent Document 1, a planetary gear mechanism (5) includes a carrier (53) that rotatably supports a large-diameter pinion gear (52a) and a small-diameter pinion gear (52b) that rotate integrally with each other, a sun gear (51) that rotates integrally with a rotor (32) of a rotary electric machine (3) and meshes with the large-diameter pinion gear (52a), a first ring gear (54a) that meshes with the large-diameter pinion gear (52a), and a second ring gear (55a) that meshes with the small-diameter pinion gear (52b).

A first fixing device is configured to selectively fix the first ring gear (54a) to a case (2) serving as a non-rotary member. A second fixing device is configured to selectively fix the second ring gear (55a) to the case (2) serving as the non-rotary member.

### Related Art Documents

### Patent Documents

Patent Document 1: Japanese Unexamined Patent Application Publication No. 2013-200012 (JP 2013-200012 A)

### SUMMARY OF THE INVENTION

### Problem to be Solved by the Invention

In the transmission of Patent Document 1, a first friction engagement device (61) constituting the first fixing device and a second friction engagement device (62) constituting the second fixing device are arranged in an axial direction (left-right direction in FIG. 1 of Patent Document 1). Therefore, the size of the transmission is likely to increase in the axial direction.

Further, the first friction engagement device (61) and the second friction engagement device (62) are disposed on a radially outer side (upper side in FIG. 1 of Patent Document 1) with respect to the planetary gear mechanism (5). Therefore, the size of the transmission is likely to increase in the radial direction.

Therefore, it is desirable to realize a technology in which a transmission is easily downsized in a configuration including a pair of friction engagement devices.

### Means for Solving the Problem

As a characteristic configuration of a transmission in view of the above, the transmission includes: a planetary gear mechanism including an input element drivingly connected to a drive source for a wheel, an output element drivingly connected to the wheel, a first stationary element, and a second stationary element; a first fixing device configured to selectively fix the first stationary element to a non-rotary member; and
a second fixing device configured to selectively fix the second stationary element to the non-rotary member, in which the first fixing device includes a first fixed gear connected to the first stationary element so as to rotate integrally with the first stationary element, a first fixing gear that meshes with the first fixed gear, and a first friction engagement device configured to selectively engage the first fixing gear with the non-rotary member, the second fixing device includes a second fixed gear connected to the second stationary element so as to rotate integrally with the second stationary element, a second fixing gear that meshes with the second fixed gear, and a second friction engagement device configured to selectively engage the second fixing gear with the non-rotary member, the first friction engagement device is disposed coaxially with the first fixing gear, the second friction engagement device is disposed coaxially with the second fixing gear, a rotation axis of the first fixing gear and a rotation axis of the second fixing gear are parallel to each other, and assuming that an axial direction is a direction along the rotation axis of the first fixing gear and the rotation axis of the second fixing gear, the first friction engagement device and the second friction engagement device are disposed so as not to overlap each other in an axial view along the axial direction.

In this characteristic configuration, the first fixing device includes the first fixed gear connected to the first stationary element of the planetary gear mechanism so as to rotate integrally with the first stationary element, the first fixing gear that meshes with the first fixed gear, and the first friction engagement device configured to selectively engage the first fixing gear with the non-rotary member. The first friction engagement device is disposed coaxially with the first fixing gear. The second fixing device includes the second fixed gear connected to the second stationary element of the planetary gear mechanism so as to rotate integrally with the second stationary element, the second fixing gear that meshes with the second fixed gear, and the second friction engagement device configured to selectively engage the second fixing gear with the non-rotary member. The second friction engagement device is disposed coaxially with the second fixing gear. Therefore, the first friction engagement device and the second friction engagement device can easily be disposed on different axes. Thus, the dimension of the transmission in the axial direction can easily be reduced compared to a configuration in which they are disposed coaxially. In this characteristic configuration, the diameter of the first fixing gear is set smaller than that of the first fixed gear in the first fixing device. Therefore, it is possible to reduce torque required to fix the first stationary element of the planetary gear mechanism to the non-rotary member. Thus, the diameter of the first friction engagement device can be reduced easily. Similarly, in the second fixing device, the diameter of the second friction engagement device can be reduced easily. As described above, with this characteristic configuration, the transmission can easily be downsized in the configuration including the pair of friction engagement devices.

As a characteristic configuration of a vehicle drive transmission device in view of the above, the drive source is a rotary electric machine including a rotor, the vehicle drive transmission device including: a rotor shaft configured to rotate integrally with the rotor; a first output member drivingly connected to a first wheel that is the wheel; a second output member drivingly connected to a second wheel that is the wheel and is different from the first wheel; a differential gear mechanism including a differential input element connected to the rotor shaft so as to rotate integrally with the rotor shaft, a first differential output element, and a second differential output element, and configured to distribute, to the first differential output element and the second differential output element, torque transmitted from the rotor shaft to the differential input element; a first transmission that is the transmission according to claim 1; and a second transmission that is the transmission according to claim 1 and is different from the first transmission, in which the input element of the first transmission is connected to the first differential output element so as to rotate integrally with the first differential output element, the output element of the first transmission is connected to the first output member so as to rotate integrally with the first output member, the input element of the second transmission is connected to the second differential output element so as to rotate integrally with the second differential output element, the output element of the second transmission is connected to the second output member so as to rotate integrally with the second output member, the first fixed gear of the first transmission and the first fixed gear of the second transmission are disposed coaxially, the first fixing gear of the first transmission and the first fixing gear of the second transmission are disposed coaxially and connected to each other so as to rotate integrally with each other, the second fixed gear of the first transmission and the second fixed gear of the second transmission are disposed coaxially, the second fixing gear of the first transmission and the second fixing gear of the second transmission are disposed coaxially and connected to each other so as to rotate integrally with each other, the first friction engagement device of the first transmission and the first friction engagement device of the second transmission are common to each other, and the second friction engagement device of the first transmission and the second friction engagement device of the second transmission are common to each other.

**In** this characteristic configuration, in the configuration in which the transmissions are provided in the power transmission path connecting the differential gear mechanism and the first output member and the power transmission path connecting the differential gear mechanism and the second output member, the first fixing gears constituting the first fixing devices of the pair of transmissions are disposed coaxially and connected to each other so as to rotate integrally with each other. The second fixing gears constituting the second fixing devices of the pair of transmissions are disposed coaxially and connected to each other so as to rotate integrally with each other. Therefore, the pair of first fixing gears can selectively be engaged with the non-rotary member by the single first friction engagement device, and the pair of second fixing gears can selectively be engaged with the non-rotary member by the single second friction engagement device. Thus, the pair of first fixing devices and the pair of second fixing devices can be downsized easily, and furthermore, the vehicle drive transmission device can be downsized easily in the configuration including the pair of transmissions.

As a characteristic configuration of a vehicle drive transmission device in view of the above, the drive source is a rotary electric machine including a rotor, the vehicle drive transmission device including: a rotor shaft configured to rotate integrally with the rotor; a first output member drivingly connected to a first wheel that is the wheel; a second output member drivingly connected to a second wheel that is the wheel and is different from the first wheel; the transmission according to claim 1; and a differential gear mechanism including a differential input element, a first differential output element, and a second differential output element, and configured to distribute, to the first differential output element and the second differential output element, torque transmitted from the transmission to the differential input element, in which the input element of the transmission is connected to the rotor shaft so as to rotate integrally with the rotor shaft, the output element of the transmission is connected to an externally toothed driving gear so as to rotate integrally with the driving gear, the differential input element is connected to an externally toothed driven gear that meshes with the driving gear so as to rotate integrally with the driven gear, the first differential output element is connected to the first output member so as to rotate integrally with the first output member, the second differential output element is connected to the second output member so as to rotate integrally with the second output member, and assuming that a first axis is an axis on which the rotor shaft and the planetary gear mechanism of the transmission are disposed, a second axis is an axis on which the first fixing gear of the transmission is disposed, a third axis is an axis on which the second fixing gear of the transmission is disposed, and a fourth axis is an axis on which the differential gear mechanism is disposed, the first axis, the second axis, the third axis, and the fourth axis are parallel to one another, and the second axis, the third axis, and the fourth axis surround the first axis.

In this characteristic configuration, in the configuration in which the planetary gear mechanism of the transmission is disposed coaxially with the rotor shaft and the differential gear mechanism is disposed on an axis different from that of the rotor shaft, the second axis on which the first fixing gear of the transmission is disposed, the third axis on which the second fixing gear of the transmission is disposed, and the fourth axis on which the differential gear mechanism is disposed surround the first axis on which the rotor shaft and the planetary gear mechanism of the transmission are disposed. Therefore, the dimension of the vehicle drive transmission device in the radial direction with respect to the first axis can be reduced easily.

### BRIEF DESCRIPTION OF THE DRAWINGS

[FIG. 1] FIG. 1 is a sectional view along an axial direction of a vehicle drive transmission device according to a first embodiment.
[FIG. 2] FIG. 2 is a skeleton diagram of the vehicle drive transmission device according to the first embodiment.
[FIG. 3] FIG. 3 is a sectional view of a first friction engagement device of the vehicle drive transmission device according to the first embodiment.
[FIG. 4] FIG. 4 is a sectional view of a second friction engagement device of the vehicle drive transmission device according to the first embodiment.
[FIG. 5] FIG. 5 is a sectional view taken along line V-V in FIG. 8.
[FIG. 6] FIG. 6 is a sectional view taken along line VI-VI in FIG. 8.
[FIG. 7] FIG. 7 is a skeleton diagram of a vehicle drive transmission device according to a second embodiment.
[FIG. 8] FIG. 8 is a diagram showing a positional relationship of elements in the vehicle drive transmission device according to the second embodiment in an axial view.
[FIG. 9] FIG. 9 is a skeleton diagram of a vehicle drive transmission device according to a third embodiment.

### MODES FOR CARRYING OUT THE INVENTION

### 1. First Embodiment

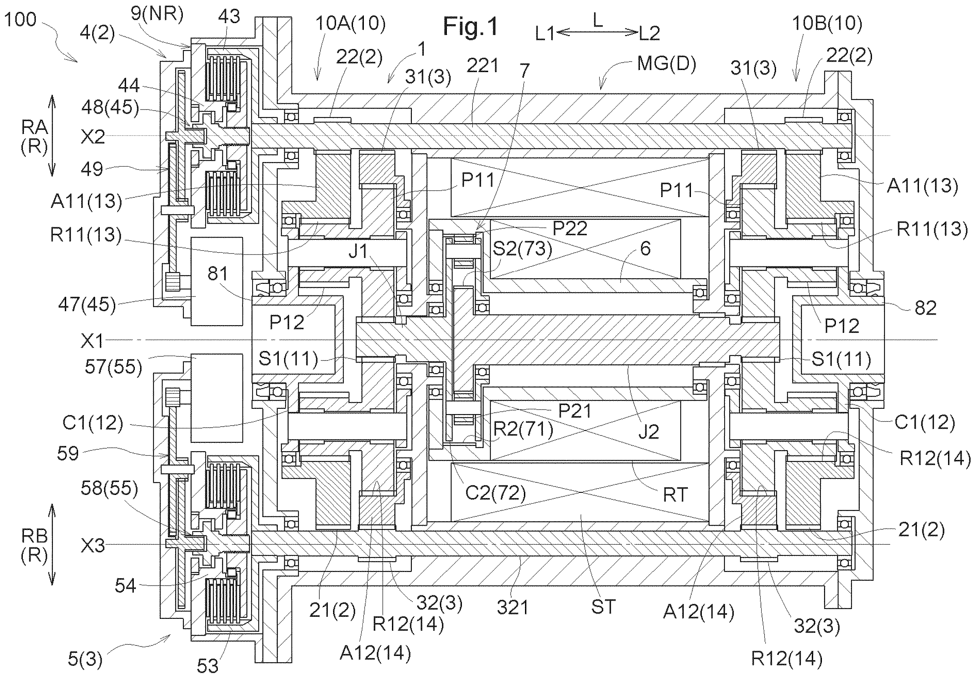

Hereinafter, a vehicle drive transmission device 100 according to a first embodiment will be described with reference to FIGS. 1 to 4.

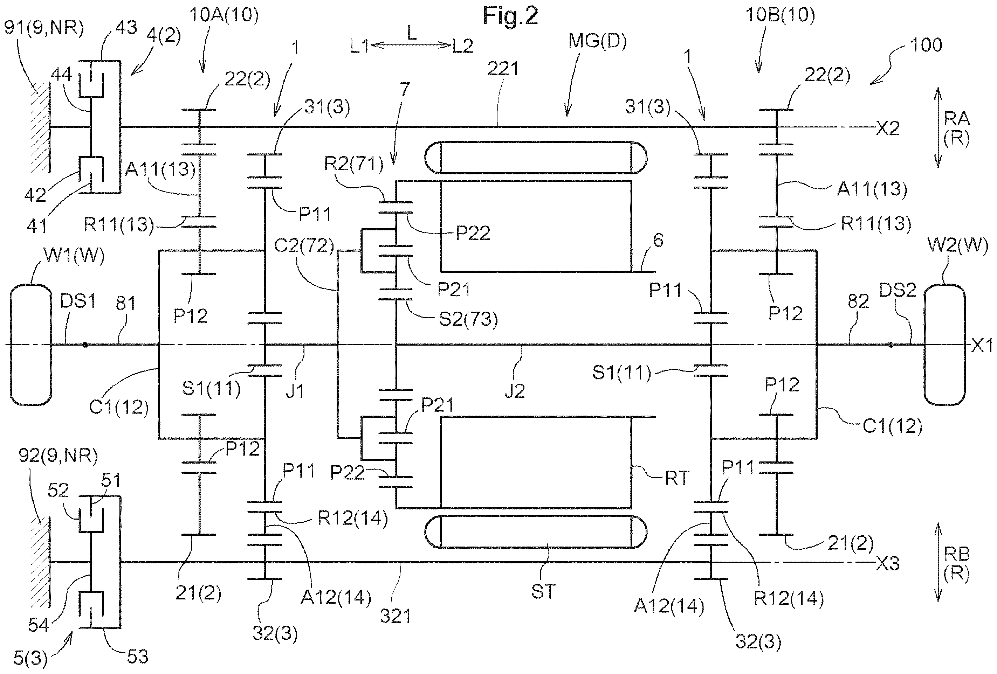

As shown in FIGS. 1 and 2, the vehicle drive transmission device 100 includes a transmission 10. In the present embodiment, the vehicle drive transmission device 100 includes a pair of transmissions 10. The transmission 10 includes a planetary gear mechanism 1, a first fixing device 2, and a second fixing device 3.

The planetary gear mechanism 1 includes an input element 11 drivingly connected to a drive source D for a wheel W (see FIG. 2), an output element 12 drivingly connected to the wheel W, a first stationary element 13, and a second stationary element 14.

In the present application, "drivingly connected" refers to a state in which two rotary elements are connected so that a driving force can be transmitted, and includes a state in which the two rotary elements are connected so as to rotate integrally or a state in which the two rotary elements are connected so that a driving force can be transmitted via one, two, or more transmission members. Such transmission members include various members that transmit rotation at the same speed or at a shifted speed, such as a shaft, a gear mechanism, a belt, and a chain. The transmission members may include an engagement device that selectively transmits rotation and a driving force, such as a friction engagement device and an intermesh engagement device. When "drivingly connected" is used for rotary elements in a planetary gear mechanism, it refers to a state in which the rotary elements are connected to each other via no other rotary elements.

In the present embodiment, a rotary electric machine MG including a stator ST and a rotor RT corresponds to the drive source D. In the present application, the "rotary electric machine" is used as a concept including any of a motor (electric motor), a generator (power generator), and a motor generator that functions as both a motor and a generator if necessary.

In the present embodiment, the planetary gear mechanism 1 is disposed on a first axis X1 that is a rotation axis of the rotor RT of the rotary electric machine MG.

In the present embodiment, the input element 11 is a sun gear S1. The output element 12 is a carrier C1. In the present embodiment, the first stationary element 13 includes a first annular portion A11 having an annular shape, and an internally toothed first ring gear R11 provided on the inner circumferential surface of the first annular portion A11. The second stationary element 14 includes a second annular portion A12 having an annular shape, and an internally toothed second ring gear R12 provided on the inner circumferential surface of the second annular portion A12.

In the present embodiment, the carrier C1 rotatably supports large-diameter pinion gears P11 and small-diameter pinion gears P12 that rotate integrally with each other. Each of the large-diameter pinion gear P11 and the small-diameter pinion gear P12 rotates (spins) about its axis, and also rotates (revolves) about the sun gear S1 together with the carrier C1. A plurality of large-diameter pinion gears P11 and a plurality of small-diameter pinion gears P12 are provided at intervals along their revolution trajectories.

The large-diameter pinion gear P11 meshes with both the sun gear S1 and the second ring gear R12. In the present embodiment, the large-diameter pinion gear P11 has a larger diameter than the sun gear S1. The small-diameter pinion gear P12 meshes with the first ring gear R11. The small-diameter pinion gear P12 has a smaller diameter than the large-diameter pinion gear P11.

The first fixing device 2 is a device that selectively fixes the first stationary element 13 of the planetary gear mechanism 1 to a non-rotary member NR. The second fixing device 3 is a device that selectively fixes the second stationary element 14 of the planetary gear mechanism 1 to the non-rotary member NR. In the present embodiment, the non-rotary member NR is a case 9 that houses the components of the vehicle drive transmission device 100 including the transmission 10.

The first fixing device 2 includes a first fixed gear 21, a first fixing gear 22, and a first friction engagement device 4.

The first fixed gear 21 is connected to the first stationary element 13 of the planetary gear mechanism 1 so as to rotate integrally with the first stationary element 13. The first fixing gear 22 is disposed so as to mesh with the first fixed gear 21. In the present embodiment, the first fixed gear 21 is an externally toothed gear provided on the outer circumferential surface of the first annular portion A11. In the present embodiment, the first fixed gear 21 has a larger diameter than the large-diameter pinion gear P11. The first fixing gear 22 has a smaller diameter than the first fixed gear 21. In the present embodiment, the first fixed gear 21 is disposed on the first axis X1. The first fixing gear 22 is disposed on a second axis X2 different from the first axis X1.

The first friction engagement device 4 is a device that selectively engages the first fixing gear 22 with the non-rotary member NR. The detailed configuration of the first friction engagement device 4 will be described later.

The second fixing device 3 includes a second fixed gear 31, a second fixing gear 32, and a second friction engagement device 5.

The second fixed gear 31 is connected to the second stationary element 14 of the planetary gear mechanism 1 so as to rotate integrally with the second stationary element 14. The second fixing gear 32 is disposed so as to mesh with the second fixed gear 31. In the present embodiment, the second fixed gear 31 is an externally toothed gear provided on the outer circumferential surface of the second annular portion A12. In the present embodiment, the second fixed gear 31 has a larger diameter than the large-diameter pinion gear P11. The second fixed gear 31 has the same diameter as the first fixed gear 21. The second fixing gear 32 has a smaller diameter than the second fixed gear 31. In the present embodiment, the second fixed gear 31 is disposed on the first axis X1. The second fixing gear 32 is disposed on a third axis X3 different from the first axis X1 and the second axis X2.

The second friction engagement device 5 is a device that selectively engages the second fixing gear 32 with the non-rotary member NR. The detailed configuration of the second friction engagement device 5 will be described later.

The rotation axis of the first fixing gear 22 (in this case, the second axis X2) and the rotation axis of the second fixing gear 32 (in this case, the third axis X3) are parallel to each other. In the present embodiment, the first axis X1, the second axis X2, and the third axis X3 are parallel to one another. In the following description, a direction along the rotation axis of the first fixing gear 22 (in this case, the second axis X2) and the rotation axis of the second fixing gear 32 (in this case, the third axis X3) will be referred to as "axial direction L." One side in the axial direction L will be referred to as "first axial side L1" and the other side in the axial direction L will be referred to as "second axial side L2."

A direction orthogonal to the rotation axis of the first fixing gear 22 (in this case, the second axis X2) will be referred to as "first radial direction RA." A direction orthogonal to the rotation axis of the second fixing gear 32 (in this case, the third axis X3) will be referred to as "second radial direction RB." Hereinafter, a direction orthogonal to the rotation axis of any rotary member, including the first radial direction RA and the second radial direction RB, will be referred to as "radial direction R." That is, the radial direction R is defined based on the rotation axis of the rotary member such as the first fixing gear 22 or the second fixing gear 32. When it is not necessary to distinguish the rotation axis to be used as a reference, or when the rotation axis to be used as a reference is clear, the direction may be simply referred to as "radial direction R."

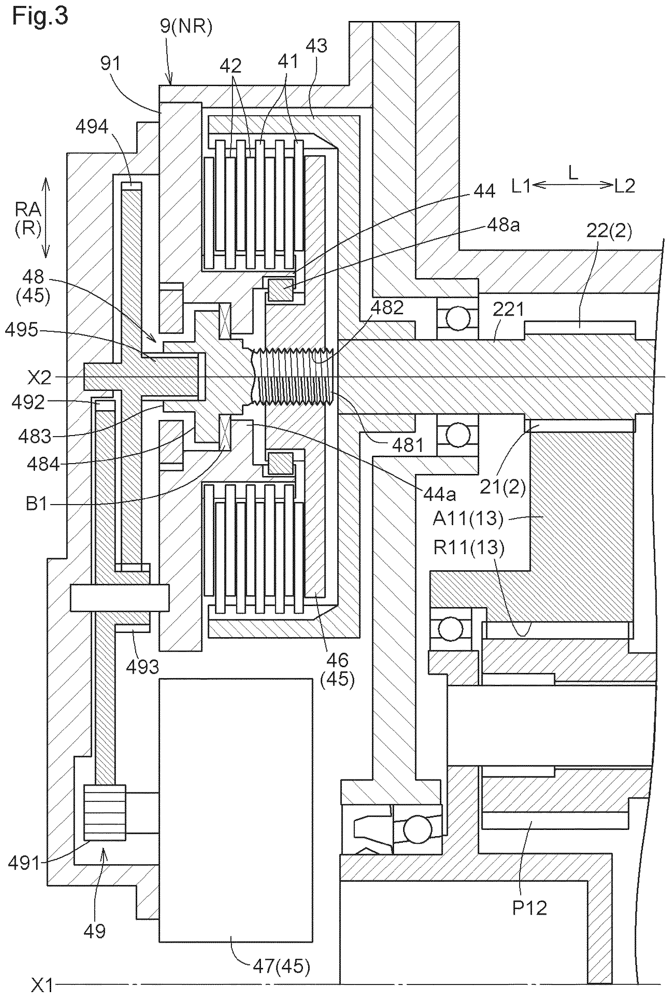

As shown in FIG. 3, the first friction engagement device 4 includes first friction members 41, second friction members 42, a first support member 43, a second support member 44, and a first pressing device 45.

The first friction members 41 and the second friction members 42 are disposed on the second axis X2. That is, the first friction members 41 and the second friction members 42 are disposed coaxially with the first fixing gear 22. The first friction member 41 and the second friction member 42 are disposed so as to face each other in the axial direction L. In the present embodiment, a plurality of first friction members 41 and a plurality of second friction members 42 are provided, and these are disposed alternately along the axial direction L. Either the first friction members 41 or the second friction members 42 may be friction plates and the remaining may be separate plates.

The first support member 43 is a member that supports the first friction members 41 in a state in which the relative rotation of the first friction members 41 is restricted. The first support member 43 is connected to the first fixing gear 22 so as to rotate integrally with the first fixing gear 22. In the present embodiment, the first support member 43 has a tubular shape extending along the axial direction L. The first support member 43 supports the outer circumferential portions of the first friction members 41.

The second support member 44 is a member that supports the second friction members 42 in a state in which the relative rotation of the second friction members 42 is restricted. The second support member 44 is fixed to the non-rotary member NR. In the present embodiment, the second support member 44 has a tubular shape extending along the axial direction L. The second support member 44 supports the inner circumferential portions of the second friction members 42. In the present embodiment, the second support member 44 is fixed to a first support wall portion 91 of the case 9 that is the non-rotary member NR. The first support wall portion 91 is formed so as to extend along the first radial direction RA. The first support wall portion 91 is disposed so as to cover the first friction members 41 and the second friction members 42 from the first axial side L1. In the example shown in FIG. 3, the second support member 44 is formed integrally with the first support wall portion 91 so as to protrude from the first support wall portion 91 to the second axial side L2.

The first pressing device 45 is a device that presses the first friction members 41 and the second friction members 42 in the axial direction L. In the present embodiment, the first pressing device 45 includes a first pressing member 46 that applies a pressing force to the first friction members 41 and the second friction members 42, a first drive motor 47, and a screw-type first linear motion conversion mechanism 48 that converts the rotational driving force of the first drive motor 47 into a driving force in the axial direction L and transmits it to the first pressing member 46.

The first pressing member 46 is positioned to overlap the first friction members 41 and the second friction members 42 in an axial view along the axial direction L. In the present embodiment, the first pressing member 46 has a plate shape extending along the first radial direction RA. Regarding the disposition of two elements, the phrase "overlap when viewed in a specific direction" means that, when a virtual straight line parallel to the line-of-sight direction is moved in directions orthogonal to the virtual straight line, an area where the virtual straight line intersects both the two elements is present at least in part.

The first drive motor 47 is a motor that generates a rotational driving force for driving the first pressing member 46. In the present embodiment, the first drive motor 47 is disposed on the outer side in the first radial direction RA with respect to the first support member 43, and is positioned to overlap the first support member 43 in a first radial view along the first radial direction RA. In the present embodiment, the first drive motor 47 is positioned to overlap the planetary gear mechanism 1 in the axial view along the axial direction L.

In the present embodiment, the first linear motion conversion mechanism 48 includes a first screw shaft member 481, a first nut member 482, a first connecting member 483, a first supported member 484, and a first speed reducing mechanism 49.

The first screw shaft member 481 is formed so as to extend along the axial direction L. The first nut member 482 has an annular shape that covers the first screw shaft member 481 from the outer side in the first radial direction RA. The first screw shaft member 481 and the first nut member 482 threadedly engage with each other. Specifically, an external thread is formed on the outer circumferential portion of the first screw shaft member 481, and an internal thread that threadedly engages with the external thread of the first screw shaft member 481 is formed on the inner circumferential portion of the first nut member 482. Therefore, when the first screw shaft member 481 rotates, the first nut member 482 performs linear motion along the axial direction L according to the direction of the rotation and the directions of the external thread and the internal thread.

The first nut member 482 is supported so as to be movable in the axial direction L but not rotatable relative to the non-rotary member NR. In the present embodiment, the first nut member 482 is disposed on the inner side in the first radial direction RA with respect to the second support member 44 fixed to the non-rotary member NR. The first nut member 482 is connected to the second support member 44 so as to be movable relative to the second support member 44 in the axial direction L but not rotatable relative to the second support member 44 via an annular first anti-rotation member 48a disposed between the first nut member 482 and the second support member 44 in the first radial direction RA. In the example shown in FIG. 3, a plurality of spline teeth extending in the axial direction L is formed on the outer circumferential portion of the first nut member 482 so as to be distributed in the circumferential direction. A plurality of spline teeth that engages with the plurality of spline teeth formed on the outer circumferential portion of the first nut member 482 is formed on the inner circumferential portion of the first anti-rotation member 48a so as to extend in the axial direction L and to be distributed in the circumferential direction. A plurality of spline teeth extending in the axial direction L is formed on the inner circumferential portion of the second support member 44 so as to be distributed in the circumferential direction. A plurality of spline teeth that engages with the plurality of spline teeth formed on the inner circumferential portion of the second support member 44 is formed on the outer circumferential portion of the first anti-rotation member 48a so as to extend in the axial direction L and to be distributed in the circumferential direction.

The first nut member 482 is connected to the first pressing member 46 so as to move in the axial direction L integrally with the first pressing member 46. In the example shown in FIG. 3, the first nut member 482 is formed integrally with the first pressing member 46. Therefore, the first pressing member 46 moves in the axial direction L via the first nut member 482 along with the rotation of the first screw shaft member 481.

The first connecting member 483 connects the first screw shaft member 481 and the first speed reducing mechanism 49. In the present embodiment, the first connecting member 483 has a tubular shape extending from the first screw shaft member 481 to the first axial side L1.

The first supported member 484 is supported in the axial direction L on the non-rotary member NR. In the present embodiment, the first supported member 484 is formed so as to protrude outward in the first radial direction RA from the first connecting member 483. The first supported member 484 is supported from the second axial side L2 via a first thrust bearing B1 on a supporting portion 44a formed so as to protrude inward in the first radial direction RA from the second support member 44 fixed to the non-rotary member NR.

The first speed reducing mechanism 49 is configured to reduce the speed of rotation of the first drive motor 47. In the present embodiment, the first speed reducing mechanism 49 includes a first gear 491, a second gear 492, a third gear 493, and a fourth gear 494.

The first gear 491 is connected to an output shaft of the first drive motor 47 so as to rotate integrally with the output shaft. In the present embodiment, the first gear 491 is disposed on the first axial side L1 with respect to the first drive motor 47.

The second gear 492 meshes with the first gear 491. The second gear 492 has a larger diameter than the first gear 491.

The third gear 493 is connected to the second gear 492 so as to rotate integrally with the second gear 492. The third gear 493 has a smaller diameter than the second gear 492. In the present embodiment, the third gear 493 is disposed on the second axial side L2 with respect to the second gear 492.

The fourth gear 494 meshes with the third gear 493. The fourth gear 494 has a larger diameter than the third gear 493. In the present embodiment, the fourth gear 494 is disposed on the second axis X2.

The number of teeth of the second gear 492 is larger than the number of teeth of the first gear 491. The number of teeth of the fourth gear 494 is larger than the number of teeth of the third gear 493 that rotates integrally with the second gear 492. Therefore, the rotation transmitted from the first drive motor 47 to the first gear 491 is transmitted to the third gear 493 with its speed reduced between the first gear 491 and the second gear 492. The speed of the rotation of the third gear 493 is reduced between the third gear 493 and the fourth gear 494.

In the present embodiment, the first connecting member 483 connects the first screw shaft member 481 and the fourth gear 494. Specifically, a gear connecting portion 495 extending from the fourth gear 494 to the second axial side L2 is connected to the first connecting member 483 so as to rotate integrally with the first connecting member 483 while being disposed on the inner side in the first radial direction RA with respect to the first connecting member 483. In the example shown in FIG. 3, a plurality of spline teeth extending in the axial direction L is formed on the inner circumferential portion of the first connecting member 483 so as to be distributed in the circumferential direction. A plurality of spline teeth that engages with the plurality of spline teeth formed on the inner circumferential portion of the first connecting member 483 is formed on the outer circumferential portion of the gear connecting portion 495 so as to extend in the axial direction L and to be distributed in the circumferential direction.

In the present embodiment, the first linear motion conversion mechanism 48 is disposed on the inner side in the first radial direction RA with respect to the first friction members 41 and the second friction members 42, and is positioned to overlap the first friction members 41 and the second friction members 42 in the first radial view along the first radial direction RA. In the example shown in FIG. 3, the first screw shaft member 481, the first nut member 482, the first connecting member 483, and the first supported member 484 of the first linear motion conversion mechanism 48 are disposed on the inner side in the first radial direction RA with respect to the first friction members 41 and the second friction members 42, and are positioned to overlap the first friction members 41 and the second friction members 42 in the first radial view along the first radial direction RA.

In the first friction engagement device 4, when the first pressing member 46 moves to the first axial side L1 to press the first friction members 41 and the second friction members 42, the movement of the first friction members 41 and the second friction members 42 to the first axial side L1 is restricted by the first support wall portion 91 of the case 9 that is the non-rotary member NR. As a result, the first friction members 41 and the second friction members 42 are connected to each other so as not to be rotatable relative to each other, and the first friction engagement device 4 is engaged. Therefore, when the first friction engagement device 4 is engaged, the first support member 43 that supports the first friction members 41 is fixed to the second support member 44 fixed to the non-rotary member NR. At this time, the first fixing gear 22 connected to the first support member 43 is fixed to the non-rotary member NR. Therefore, the first stationary element 13 connected so as to rotate integrally with the first fixed gear 21 that meshes with the first fixing gear 22 is fixed to the non-rotary member NR.

When the first pressing member 46 moves to the second axial side L2 and the pressing of the first friction members 41 and the second friction members 42 by the first pressing member 46 is terminated, the first friction members 41 and the second friction members 42 become rotatable relative to each other, and the first friction engagement device 4 is disengaged. When the first friction engagement device 4 is disengaged, the first support member 43 that supports the first friction members 41 becomes rotatable relative to the second support member 44 fixed to the non-rotary member NR. At this time, the first fixing gear 22 connected to the first support member 43 becomes rotatable relative to the non-rotary member NR. Therefore, the first stationary element 13 connected so as to rotate integrally with the first fixed gear 21 that meshes with the first fixing gear 22 is not fixed to the non-rotary member NR.

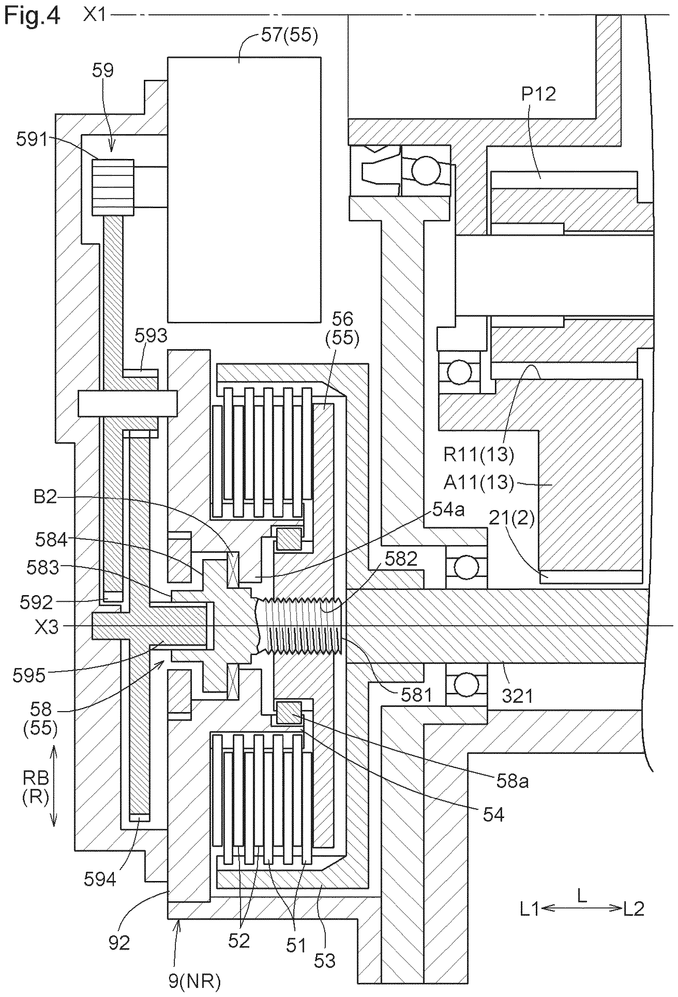

As shown in FIG. 4, the second friction engagement device 5 includes third friction members 51, fourth friction members 52, a third support member 53, a fourth support member 54, and a second pressing device 55.

The third friction members 51 and the fourth friction members 52 are disposed on the third axis X3. That is, the third friction members 51 and the fourth friction members 52 are disposed coaxially with the second fixing gear 32. The third friction members 51 and the fourth friction members 52 are disposed so as to face each other in the axial direction L. In the present embodiment, a plurality of third friction members 51 and a plurality of fourth friction members 52 are provided, and these are disposed alternately along the axial direction L. Either the third friction members 51 or the fourth friction members 52 may be friction plates and the remaining may be separate plates.

The third support member 53 is a member that supports the third friction members 51 in a state in which the relative rotation of the third friction members 51 is restricted. The third support member 53 is connected to the second fixing gear 32 so as to rotate integrally with the second fixing gear 32. In the present embodiment, the third support member 53 has a tubular shape extending along the axial direction L. The third support member 53 supports the outer circumferential portions of the third friction members 51.

The fourth support member 54 is a member that supports the fourth friction members 52 in a state in which the relative rotation of the fourth friction members 52 is restricted. The fourth support member 54 is fixed to the non-rotary member NR. In the present embodiment, the fourth support member 54 has a tubular shape extending along the axial direction L. The fourth support member 54 supports the inner circumferential portions of the fourth friction members 52. In the present embodiment, the fourth support member 54 is fixed to a second support wall portion 92 of the case 9 that is the non-rotary member NR. The second support wall portion 92 is formed so as to extend along the second radial direction RB. The second support wall portion 92 is disposed so as to cover the third friction members 51 and the fourth friction members 52 from the first axial side L1. In the example shown in FIG. 4, the fourth support member 54 is formed integrally with the second support wall portion 92 so as to protrude from the second support wall portion 92 to the second axial side L2.

The second pressing device 55 is a device that presses the third friction members 51 and the fourth friction members 52 in the axial direction L. In the present embodiment, the second pressing device 55 includes a second pressing member 56 that applies a pressing force to the third friction members 51 and the fourth friction members 52, a second drive motor 57, and a screw-type second linear motion conversion mechanism 58 that converts the rotational driving force of the second drive motor 57 into a driving force in the axial direction L and transmits it to the second pressing member 56.

The second pressing member 56 is positioned to overlap the third friction members 51 and the fourth friction members 52 in the axial view along the axial direction L. In the present embodiment, the second pressing member 56 has a plate shape extending along the second radial direction RB.

The second drive motor 57 is a motor that generates a rotational driving force for driving the second pressing member 56. In the present embodiment, the second drive motor 57 is disposed on the outer side in the second radial direction RB with respect to the third support member 53, and is positioned to overlap the third support member 53 in a second radial view along the second radial direction RB. In the present embodiment, the second drive motor 57 is positioned to overlap the planetary gear mechanism 1 in the axial view along the axial direction L.

In the present embodiment, the second linear motion conversion mechanism 58 includes a second screw shaft member 581, a second nut member 582, a second connecting member 583, a second supported member 584, and a second speed reducing mechanism 59.

The second screw shaft member 581 is formed so as to extend along the axial direction L. The second nut member 582 has an annular shape that covers the second screw shaft member 581 from the outer side in the second radial direction RB. The second screw shaft member 581 and the second nut member 582 threadedly engage with each other. Specifically, an external thread is formed on the outer circumferential portion of the second screw shaft member 581, and an internal thread that threadedly engages with the external thread of the second screw shaft member 581 is formed on the inner circumferential portion of the second nut member 582. Therefore, when the second screw shaft member 581 rotates, the second nut member 582 performs linear motion along the axial direction L according to the direction of the rotation and the directions of the external thread and the internal thread.

The second nut member 582 is supported so as to be movable in the axial direction L but not rotatable relative to the non-rotary member NR. In the present embodiment, the second nut member 582 is disposed on the inner side in the second radial direction RB with respect to the fourth support member 54 fixed to the non-rotary member NR. The second nut member 582 is connected to the fourth support member 54 so as to be movable relative to the fourth support member 54 in the axial direction L but not rotatable relative to the fourth support member 54 via an annular second anti-rotation member 58a disposed between the second nut member 582 and the fourth support member 54 in the second radial direction RB. In the example shown in FIG. 4, a plurality of spline teeth extending in the axial direction L is formed on the outer circumferential portion of the second nut member 582 so as to be distributed in the circumferential direction. A plurality of spline teeth that engages with the plurality of spline teeth formed on the outer circumferential portion of the second nut member 582 is formed on the inner circumferential portion of the second anti-rotation member 58a so as to extend in the axial direction L and to be distributed in the circumferential direction. A plurality of spline teeth extending in the axial direction L is formed on the inner circumferential portion of the fourth support member 54 so as to be distributed in the circumferential direction. A plurality of spline teeth that engages with the plurality of spline teeth formed on the inner circumferential portion of the fourth support member 54 is formed on the outer circumferential portion of the second anti-rotation member 58a so as to extend in the axial direction L and to be distributed in the circumferential direction.

The second nut member 582 is connected to the second pressing member 56 so as to move in the axial direction L integrally with the second pressing member 56. In the example shown in FIG. 4, the second nut member 582 is formed integrally with the second pressing member 56. Therefore, the second pressing member 56 moves in the axial direction L via the second nut member 582 along with the rotation of the second screw shaft member 581.

The second connecting member 583 connects the second screw shaft member 581 and the second speed reducing mechanism 59. In the present embodiment, the second connecting member 583 has a tubular shape extending from the second screw shaft member 581 to the first axial side L1.

The second supported member 584 is supported in the axial direction L on the non-rotary member NR. In the present embodiment, the second supported member 584 is formed so as to protrude outward in the second radial direction RB from the second connecting member 583. The second supported member 584 is supported from the second axial side L2 via a second thrust bearing B2 on a supporting portion 54a formed so as to protrude inward in the second radial direction RB from the fourth support member 54 fixed to the non-rotary member NR.

The second speed reducing mechanism 59 is configured to reduce the speed of rotation of the second drive motor 57. In the present embodiment, the second speed reducing mechanism 59 includes a fifth gear 591, a sixth gear 592, a seventh gear 593, and an eighth gear 594.

The fifth gear 591 is connected to an output shaft of the second drive motor 57 so as to rotate integrally with the output shaft. In the present embodiment, the fifth gear 591 is disposed on the first axial side L1 with respect to the second drive motor 57.

The sixth gear 592 meshes with the fifth gear 591. The sixth gear 592 has a larger diameter than the fifth gear 591.

The seventh gear 593 is connected to the sixth gear 592 so as to rotate integrally with the sixth gear 592. The seventh gear 593 has a smaller diameter than the sixth gear 592. In the present embodiment, the seventh gear 593 is disposed on the second axial side L2 with respect to the sixth gear 592.

The eighth gear 594 meshes with the seventh gear 593. The eighth gear 594 has a larger diameter than the seventh gear 593. In the present embodiment, the eighth gear 594 is disposed on the third axis X3.

The number of teeth of the sixth gear 592 is larger than the number of teeth of the fifth gear 591. The number of teeth of the eighth gear 594 is larger than the number of teeth of the seventh gear 593 that rotates integrally with the sixth gear 592. Therefore, the rotation transmitted from the second drive motor 57 to the fifth gear 591 is transmitted to the seventh gear 593 with its speed reduced between the fifth gear 591 and the sixth gear 592. The speed of the rotation of the seventh gear 593 is reduced between the seventh gear 593 and the eighth gear 594.

**In** the present embodiment, the second connecting member 583 connects the second screw shaft member 581 and the eighth gear 594. Specifically, a gear connecting portion 595 extending from the eighth gear 594 to the second axial side L2 is connected to the second connecting member 583 so as to rotate integrally with the second connecting member 583 while being disposed on the inner side in the second radial direction RB with respect to the second connecting member 583. In the example shown in FIG. 4, a plurality of spline teeth extending in the axial direction L is formed on the inner circumferential portion of the second connecting member 583 so as to be distributed in the circumferential direction. A plurality of spline teeth that engages with the plurality of spline teeth formed on the inner circumferential portion of the second connecting member 583 is formed on the outer circumferential portion of the gear connecting portion 595 so as to extend in the axial direction L and to be distributed in the circumferential direction.

In the present embodiment, the second linear motion conversion mechanism 58 is disposed on the inner side in the second radial direction RB with respect to the third friction members 51 and the fourth friction members 52, and is positioned to overlap the third friction members 51 and the fourth friction members 52 in the second radial view along the second radial direction RB. In the example shown in FIG. 4, the second screw shaft member 581, the second nut member 582, the second connecting member 583, and the second supported member 584 of the second linear motion conversion mechanism 58 are disposed on the inner side in the second radial direction RB with respect to the third friction members 51 and the fourth friction members 52, and are positioned to overlap the third friction members 51 and the fourth friction members 52 in the second radial view along the second radial direction RB.

In the second friction engagement device 5, when the second pressing member 56 moves to the first axial side L1 to press the third friction members 51 and the fourth friction members 52, the movement of the third friction members 51 and the fourth friction members 52 to the first axial side L1 is restricted by the second support wall portion 92 of the case 9 that is the non-rotary member NR. As a result, the third friction members 51 and the fourth friction members 52 are connected to each other so as not to be rotatable relative to each other, and the second friction engagement device 5 is engaged. Therefore, when the second friction engagement device 5 is engaged, the third support member 53 that supports the third friction members 51 is fixed to the fourth support member 54 fixed to the non-rotary member NR. At this time, the second fixing gear 32 connected to the third support member 53 is fixed to the non-rotary member NR. Therefore, the second stationary element 14 connected so as to rotate integrally with the second fixed gear 31 that meshes with the second fixing gear 32 is fixed to the non-rotary member NR.

When the second pressing member 56 moves to the second axial side L2 and the pressing of the third friction members 51 and the fourth friction members 52 by the second pressing member 56 is terminated, the third friction members 51 and the fourth friction members 52 become rotatable relative to each other, and the second friction engagement device 5 is disengaged. When the second friction engagement device 5 is disengaged, the third support member 53 that supports the third friction members 51 becomes rotatable relative to the fourth support member 54 fixed to the non-rotary member NR. At this time, the second fixing gear 32 connected to the third support member 53 becomes rotatable relative to the non-rotary member NR. Therefore, the second stationary element 14 connected so as to rotate integrally with the second fixed gear 31 that meshes with the second fixing gear 32 is not fixed to the non-rotary member NR.

As shown in FIGS. 1 and 2, in the present embodiment, when the first friction engagement device 4 is engaged, the first ring gear R11 having a relatively small diameter and meshing with the small-diameter pinion gear P12 is fixed to the non-rotary member NR. When the second friction engagement device 5 is engaged, the second ring gear R12 having a relatively large diameter and meshing with the large-diameter pinion gear P11 is fixed to the non-rotary member NR.

Therefore, in the present embodiment, when the first friction engagement device 4 is engaged and the second friction engagement device 5 is disengaged, a shift speed with a relatively large speed ratio (low speed) is established. When the first friction engagement device 4 is disengaged and the second friction engagement device 5 is engaged, a shift speed with a relatively small speed ratio (high speed) is established.

When both the first friction engagement device 4 and the second friction engagement device 5 are engaged, the carrier C1 that is the output element 12 is fixed to the non-rotary member NR. As a result, the wheel W drivingly connected to the output element 12 is locked. Thus, the first friction engagement device 4 and the second friction engagement device 5 function as a parking brake.

When both the first friction engagement device 4 and the second friction engagement device 5 are disengaged, the first ring gear R11 of the first stationary element 13 and the second ring gear R12 of the second stationary element 14 are not fixed to the non-rotary member NR. As a result, the driving force of the drive source D cannot be transmitted to the wheel W (neutral state).

As described above, the transmission 10 includes: the planetary gear mechanism 1 including the input element 11 drivingly connected to the drive source D for the wheel W, the output element 12 drivingly connected to the wheel W, the first stationary element 13, and the second stationary element 14; the first fixing device 2 configured to selectively fix the first stationary element 13 to the non-rotary member NR; and the second fixing device 3 configured to selectively fix the second stationary element 14 to the non-rotary member NR, in which the first fixing device 2 includes the first fixed gear 21 connected to the first stationary element 13 so as to rotate integrally with the first stationary element 13, the first fixing gear 22 that meshes with the first fixed gear 21, and the first friction engagement device 4 configured to selectively engage the first fixing gear 22 with the non-rotary member NR, the second fixing device 3 includes the second fixed gear 31 connected to the second stationary element 14 so as to rotate integrally with the second stationary element 14, the second fixing gear 32 that meshes with the second fixed gear 31, and the second friction engagement device 5 configured to selectively engage the second fixing gear 32 with the non-rotary member NR, the first friction engagement device 4 is disposed coaxially with the first fixing gear 22, the second friction engagement device 5 is disposed coaxially with the second fixing gear 32, the rotation axis of the first fixing gear 22 and the rotation axis of the second fixing gear 32 are parallel to each other, and the first friction engagement device 4 and the second friction engagement device 5 are disposed so as not to overlap each other in the axial view along the axial direction L.

In this configuration, the first fixing device 2 includes the first fixed gear 21 connected to the first stationary element 13 of the planetary gear mechanism 1 so as to rotate integrally with the first stationary element 13, the first fixing gear 22 that meshes with the first fixed gear 21, and the first friction engagement device 4 configured to selectively engage the first fixing gear 22 with the non-rotary member NR. The first friction engagement device 4 is disposed coaxially with the first fixing gear 22. The second fixing device 3 includes the second fixed gear 31 connected to the second stationary element 14 of the planetary gear mechanism 1 so as to rotate integrally with the second stationary element 14, the second fixing gear 32 that meshes with the second fixed gear 31, and the second friction engagement device 5 configured to selectively engage the second fixing gear 32 with the non-rotary member NR. The second friction engagement device 5 is disposed coaxially with the second fixing gear 32. Therefore, the first friction engagement device 4 and the second friction engagement device 5 can easily be disposed on different axes. Thus, the dimension of the transmission 10 in the axial direction L can easily be reduced compared to a configuration in which they are disposed coaxially.
In this configuration, the diameter of the first fixing gear 22 is set smaller than that of the first fixed gear 21 in the first fixing device 2. Therefore, it is possible to reduce torque required to fix the first stationary element 13 of the planetary gear mechanism 1 to the non-rotary member NR. Thus, the diameter of the first friction engagement device 4 can be reduced easily. Similarly, in the second fixing device 3, the diameter of the second friction engagement device 5 can be reduced easily. As described above, with this configuration, the transmission 10 can easily be downsized in the configuration including the pair of friction engagement devices 4, 5.

As described above, in the present embodiment, the first friction engagement device 4 includes the first friction members 41 disposed coaxially with the first fixing gear 22, the second friction members 42 disposed coaxially with the first fixing gear 22 so as to face the first friction members 41 in the axial direction L, the first support member 43 connected to the first fixing gear 22 so as to rotate integrally with the first fixing gear 22 and supporting the first friction members 41 in a state in which the relative rotation of the first friction members 41 is restricted, the second support member 44 fixed to the non-rotary member NR and supporting the second friction members 42 in a state in which the relative rotation of the second friction members 42 is restricted, and the first pressing device 45 configured to press the first friction members 41 and the second friction members 42 in the axial direction L, the second friction engagement device 5 includes the third friction members 51 disposed coaxially with the second fixing gear 32, the fourth friction members 52 disposed coaxially with the second fixing gear 32 so as to face the third friction members 51 in the axial direction L, the third support member 53 connected to the second fixing gear 32 so as to rotate integrally with the second fixing gear 32 and supporting the third friction members 51 in a state in which the relative rotation of the third friction members 51 is restricted, the fourth support member 54 fixed to the non-rotary member NR and supporting the fourth friction members 52 in a state in which the relative rotation of the fourth friction members 52 is restricted, and the second pressing device 55 configured to press the third friction members 51 and the fourth friction members 52 in the axial direction L, the first pressing device 45 includes the first pressing member 46 configured to apply a pressing force to the first friction members 41 and the second friction members 42, the first drive motor 47, and the screw-type first linear motion conversion mechanism 48 configured to convert the rotational driving force of the first drive motor 47 into a driving force in the axial direction L and transmit the driving force to the first pressing member 46, the first linear motion conversion mechanism 48 is disposed on the inner side in the first radial direction RA with respect to the first friction members 41 and the second friction members 42, and is positioned to overlap the first friction members 41 and the second friction members 42 in the first radial view along the first radial direction RA, the second pressing device 55 includes the second pressing member 56 configured to apply a pressing force to the third friction members 51 and the fourth friction members 52, the second drive motor 57, and the screw-type second linear motion conversion mechanism 58 configured to convert the rotational driving force of the second drive motor 57 into a driving force in the second axial direction and transmit the driving force to the second pressing member 56, and the second linear motion conversion mechanism 58 is disposed on the inner side in the second radial direction RB with respect to the third friction members 51 and the fourth friction members 52, and is positioned to overlap the third friction members 51 and the fourth friction members 52 in the second radial view along the second radial direction RB.

In this configuration, the first friction engagement device 4 includes the first friction members 41, the second friction members 42, and the first support member 43 that are disposed coaxially with the first fixing gear 22. Therefore, the dimension of the first friction engagement device 4 in the radial direction R can easily be reduced compared to a configuration in which the first friction members 41, the second friction members 42, and the first support member 43 are disposed coaxially with the first stationary element 13 of the planetary gear mechanism 1. Similarly, in the second fixing device 3, the dimension of the second friction engagement device 5 in the radial direction R can easily be reduced compared to a configuration in which the third friction members 51, the fourth friction members 52, and the third support member 53 are disposed coaxially with the second stationary element 14 of the planetary gear mechanism 1. In this configuration, the first linear motion conversion mechanism 48 of the first pressing device 45 is disposed using the space on the inner side in the first radial direction RA with respect to the first friction members 41 and the second friction members 42, and the second linear motion conversion mechanism 58 of the second pressing device 55 is disposed using the space on the inner side in the second radial direction RB with respect to the third friction members 51 and the fourth friction members 52. Therefore, the first friction engagement device 4 including the first pressing device 45 and the second friction engagement device 5 including the second pressing device 55 can be downsized easily, and furthermore, the transmission 10 can be downsized easily. In this configuration, the first pressing member 46 operates in the axial direction L by the screw-type first linear motion conversion mechanism 48, and the second pressing member 56 operates in the axial direction L by the screw-type second linear motion conversion mechanism 58. Therefore, the positions of the first pressing member 46 and the second pressing member 56 can be maintained even when there is no driving force from the first drive motor 47 and the second drive motor 57. Thus, even when no electric power is supplied to the transmission 10, both the first friction engagement device 4 and the second friction engagement device 5 can be engaged, and the output element 12 of the planetary gear mechanism 1 can be locked so as not to rotate. This eliminates the need to provide a separate parking brake.

As described above, in the present embodiment, the first stationary element 13 includes the first annular portion A11 having an annular shape, and the internally toothed first ring gear R11 provided on the inner circumferential surface of the first annular portion A11, the second stationary element 14 includes the second annular portion A12 having an annular shape, and the internally toothed second ring gear R12 provided on the inner circumferential surface of the second annular portion A12, the first fixed gear 21 is the externally toothed gear provided on the outer circumferential surface of the first annular portion A11, and the second fixed gear 31 is the externally toothed gear provided on the outer circumferential surface of the second annular portion A12.

In this configuration, the first fixed gear 21 and the second fixed gear 31 can easily be disposed in the region on the outer side in the radial direction R with respect to the planetary gear mechanism 1. Therefore, the transmission 10 can easily be downsized in the configuration in which the first fixed gear 21 and the first fixing gear 22 mesh with each other and the second fixed gear 31 and the second fixing gear 32 mesh with each other.

As described above, in the present embodiment, the vehicle drive transmission device 100 includes the pair of transmissions 10. In the following description, one of the pair of transmissions 10 will be referred to as "first transmission 10A" and the other will be referred to as "second transmission 10B."

As shown in FIGS. 1 and 2, in the present embodiment, the vehicle drive transmission device 100 includes a rotor shaft 6, a differential gear mechanism 7, a first output member 81, and a second output member 82 in addition to the first transmission 10A and the second transmission 10B.

The rotor shaft 6 is a shaft member that rotates integrally with the rotor RT of the rotary electric machine MG. In the present embodiment, the rotor shaft 6 is disposed on the first axis X1. The rotor shaft 6 has a tubular shape extending along the axial direction L. The rotor shaft 6 is disposed so as to support the rotor RT from the inner side in the radial direction R.

The differential gear mechanism 7 includes a differential input element 71, a first differential output element 72, and a second differential output element 73. In the present embodiment, the differential gear mechanism 7 distributes, to the first differential output element 72 and the second differential output element 73, torque transmitted from the rotor shaft 6 to the differential input element 71. In the present embodiment, the differential gear mechanism 7 is disposed on the first axis X1.

The differential input element 71 is an input element of the differential gear mechanism 7. In the present embodiment, the differential input element 71 is connected to the rotor shaft 6 so as to rotate integrally with the rotor shaft 6. The first differential output element 72 and the second differential output element 73 are output elements of the differential gear mechanism 7.

In the present embodiment, the differential gear mechanism 7 is a planetary gear type differential gear mechanism including a differential sun gear S2, a differential carrier C2, and a differential ring gear R2. The differential gear mechanism 7 is a double-pinion type planetary gear mechanism. Therefore, the differential carrier C2 rotatably supports inner pinion gears P21 that mesh with the differential sun gear S2, and outer pinion gears P22 that mesh with the inner pinion gears P21 and the differential ring gear R2.

In the present embodiment, the differential ring gear R2 is connected to the rotor shaft 6 so as to rotate integrally with the rotor shaft 6. That is, in the present embodiment, the differential ring gear R2 functions as the differential input element 71. In the example shown in FIG. 1, the end of the rotor shaft 6 on the first axial side L1 extends outward in the radial direction R along the end face of the rotor RT on the first axial side L1, and is connected to the differential ring gear R2.

In the present embodiment, the differential carrier C2 functions as the first differential output element 72. The differential sun gear S2 functions as the second differential output element 73.

The first output member 81 is drivingly connected to a first wheel W1 (see FIG. 2) that is the wheel W described above. The second output member 82 is drivingly connected to a second wheel W2 (see FIG. 2) that is the wheel W described above and is different from the first wheel W1. In the present embodiment, the first output member 81 is connected to the first wheel W1 via a first drive shaft DS1 (see FIG. 2) so as to rotate integrally with the first wheel W1. The second output member 82 is connected to the second wheel W2 via a second drive shaft DS2 (see FIG. 2) so as to rotate integrally with the second wheel W2. In the present embodiment, the first output member 81 and the second output member 82 are disposed on the first axis X1. The first wheel W1 and the second wheel W2 are a pair of right and left wheels (e.g., a pair of right and left front wheels or a pair of right and left rear wheels).

In the present embodiment, the planetary gear mechanism 1 of the first transmission 10A, the differential gear mechanism 7, the rotary electric machine MG, and the planetary gear mechanism 1 of the second transmission 10B are disposed on the first axis X1 in the stated order from the first axial side L1 to the second axial side L2. That is, in the present embodiment, the planetary gear mechanism 1 of the first transmission 10A and the planetary gear mechanism 1 of the second transmission 10B are disposed separately on both sides in the axial direction L with respect to the rotary electric machine MG and the differential gear mechanism 7.

The input element 11 of the first transmission 10A is connected to the first differential output element 72 so as to rotate integrally with the first differential output element 72. In the present embodiment, the sun gear S1 that is the input element 11 of the first transmission 10A is connected to the differential carrier C2 that is the first differential output element 72 via a first connecting shaft J1 so as to rotate integrally with the differential carrier C2. The first connecting shaft J1 is a shaft member extending along the axial direction L so as to connect the sun gear S1 of the first transmission 10A and the differential carrier C2.

The output element 12 of the first transmission 10A is connected to the first output member 81 so as to rotate integrally with the first output member 81. In the present embodiment, the carrier C1 that is the output element 12 of the first transmission 10A is formed integrally with the first output member 81.

The input element 11 of the second transmission 10B is connected to the second differential output element 73 so as to rotate integrally with the second differential output element 73. In the present embodiment, the sun gear S1 that is the input element 11 of the second transmission 10B is connected to the differential sun gear S2 that is the second differential output element 73 via a second connecting shaft J2 so as to rotate integrally with the differential sun gear S2. The second connecting shaft J2 is a shaft member extending along the axial direction L so as to connect the sun gear S1 of the second transmission 10B and the differential sun gear S2. In the present embodiment, the second connecting shaft J2 is disposed so as to extend through the rotor shaft 6 in the axial direction L on the inner side in the radial direction R with respect to the rotor shaft 6.

The output element 12 of the second transmission 10B is connected to the second output member 82 so as to rotate integrally with the second output member 82. In the present embodiment, the carrier C1 that is the output element 12 of the second transmission 10B is formed integrally with the second output member 82.

The first fixed gear 21 of the first transmission 10A and the first fixed gear 21 of the second transmission 10B are disposed on the first axis X1. That is, the first fixed gear 21 of the first transmission 10A and the first fixed gear 21 of the second transmission 10B are disposed coaxially.

The second fixed gear 31 of the first transmission 10A and the second fixed gear 31 of the second transmission 10B are disposed on the first axis X1. That is, the second fixed gear 31 of the first transmission 10A and the second fixed gear 31 of the second transmission 10B are disposed coaxially.

The first fixing gear 22 of the first transmission 10A and the first fixing gear 22 of the second transmission 10B are disposed on the second axis X2. That is, the first fixing gear 22 of the first transmission 10A and the first fixing gear 22 of the second transmission 10B are disposed coaxially. The first fixing gear 22 of the first transmission 10A and the first fixing gear 22 of the second transmission 10B are connected to each other so as to rotate integrally with each other. In the present embodiment, the first fixing gear 22 of the first transmission 10A and the first fixing gear 22 of the second transmission 10B are connected to each other via a first fixing gear connecting member 221 so as to rotate integrally with each other. The first fixing gear connecting member 221 is a shaft member formed so as to extend along the axial direction L.

The second fixing gear 32 of the first transmission 10A and the second fixing gear 32 of the second transmission 10B are disposed on the third axis X3. That is, the second fixing gear 32 of the first transmission 10A and the second fixing gear 32 of the second transmission 10B are disposed coaxially. The second fixing gear 32 of the first transmission 10A and the second fixing gear 32 of the second transmission 10B are connected to each other so as to rotate integrally with each other. In the present embodiment, the second fixing gear 32 of the first transmission 10A and the second fixing gear 32 of the second transmission 10B are connected to each other via a second fixing gear connecting member 321 so as to rotate integrally with each other. The second fixing gear connecting member 321 is a shaft member formed so as to extend along the axial direction L.

In the present embodiment, the first fixing gear 22 of the first transmission 10A and the first fixing gear 22 of the second transmission 10B are connected to the first support member 43 of the first friction engagement device 4 via the first fixing gear connecting member 221 so as to rotate integrally with the first support member 43. Therefore, when the first friction engagement device 4 is engaged, the first fixing gear 22 of the first transmission 10A and the first fixing gear 22 of the second transmission 10B are fixed to the non-rotary member NR. When the first friction engagement device 4 is disengaged, the first fixing gear 22 of the first transmission 10A and the first fixing gear 22 of the second transmission 10B become rotatable relative to the non-rotary member NR. In this way, in the present embodiment, the first transmission 10A and the second transmission 10B share the single first friction engagement device 4. That is, in the present embodiment, the first friction engagement device 4 of the first transmission 10A and the first friction engagement device 4 of the second transmission 10B are common to each other.

In the present embodiment, the second fixing gear 32 of the first transmission 10A and the second fixing gear 32 of the second transmission 10B are connected to the third support member 53 of the second friction engagement device 5 via the second fixing gear connecting member 321 so as to rotate integrally with the third support member 53. Therefore, when the second friction engagement device 5 is engaged, the second fixing gear 32 of the first transmission 10A and the second fixing gear 32 of the second transmission 10B are fixed to the non-rotary member NR. When the second friction engagement device 5 is disengaged, the second fixing gear 32 of the first transmission 10A and the second fixing gear 32 of the second transmission 10B become rotatable relative to the non-rotary member NR. In this way, in the present embodiment, the first transmission 10A and the second transmission 10B share the single second friction engagement device 5. That is, in the present embodiment, the second friction engagement device 5 of the first transmission 10A and the second friction engagement device 5 of the second transmission 10B are common to each other.

As described above, in the present embodiment, the drive source D is the rotary electric machine MG including the rotor RT, the vehicle drive transmission device 100 includes: the rotor shaft 6 configured to rotate integrally with the rotor RT; the first output member 81 drivingly connected to the first wheel W1 that is the wheel W; the second output member 82 drivingly connected to the second wheel W2 that is the wheel W and is different from the first wheel W1; the differential gear mechanism 7 including the differential input element 71 connected to the rotor shaft 6 so as to rotate integrally with the rotor shaft 6, the first differential output element 72, and the second differential output element 73, and configured to distribute, to the first differential output element 72 and the second differential output element 73, torque transmitted from the rotor shaft 6 to the differential input element 71; the first transmission 10A that is the transmission 10 described above; and the second transmission 10B that is the transmission 10 described above and is different from the first transmission 10A, the input element 11 of the first transmission 10A is connected to the first differential output element 72 so as to rotate integrally with the first differential output element 72, the output element 12 of the first transmission 10A is connected to the first output member 81 so as to rotate integrally with the first output member 81, the input element 11 of the second transmission 10B is connected to the second differential output element 73 so as to rotate integrally with the second differential output element 73, the output element 12 of the second transmission 10B is connected to the second output member 82 so as to rotate integrally with the second output member 82, the first fixed gear 21 of the first transmission 10A and the first fixed gear 21 of the second transmission 10B are disposed coaxially, the first fixing gear 22 of the first transmission 10A and the first fixing gear 22 of the second transmission 10B are disposed coaxially and connected to each other so as to rotate integrally with each other, the second fixed gear 31 of the first transmission 10A and the second fixed gear 31 of the second transmission 10B are disposed coaxially, the second fixing gear 32 of the first transmission 10A and the second fixing gear 32 of the second transmission 10B are disposed coaxially and connected to each other so as to rotate integrally with each other, the first friction engagement device 4 of the first transmission 10A and the first friction engagement device 4 of the second transmission 10B are common to each other, and the second friction engagement device 5 of the first transmission 10A and the second friction engagement device 5 of the second transmission 10B are common to each other.

In this configuration, in the configuration in which the transmissions 10 are provided in the power transmission path connecting the differential gear mechanism 7 and the first output member 81 and the power transmission path connecting the differential gear mechanism 7 and the second output member 82, the first fixing gears 22 constituting the first fixing devices 2 of the pair of transmissions 10 are disposed coaxially and connected to each other so as to rotate integrally with each other. The second fixing gears 32 constituting the second fixing devices 3 of the pair of transmissions 10 are disposed coaxially and connected to each other so as to rotate integrally with each other. Therefore, the pair of first fixing gears 22 can selectively be engaged with the non-rotary member NR by the single first friction engagement device 4, and the pair of second fixing gears 32 can selectively be engaged with the non-rotary member NR by the single second friction engagement device 5. Thus, the pair of first fixing devices 2 and the pair of second fixing devices 3 can be downsized easily, and furthermore, the vehicle drive transmission device 100 can be downsized easily in the configuration including the pair of transmissions 10.

In the present embodiment, the first friction engagement device 4 and the second friction engagement device 5 are disposed such that their disposition areas in the axial direction L overlap each other. The first friction engagement device 4 and the second friction engagement device 5 are disposed so as not to overlap each other in the axial view along the axial direction L. The first friction engagement device 4 and the second friction engagement device 5 may be disposed away from each other in the axial direction L. In this case, for example, the first friction engagement device 4 and the second friction engagement device 5 may be disposed separately on both sides in the axial direction L with respect to the rotary electric machine MG and the planetary gear mechanisms 1 of the pair of transmissions 10. The first friction engagement device 4 and the second friction engagement device 5 may be disposed so as to overlap each other in the axial view along the axial direction L.

### 2. Second Embodiment

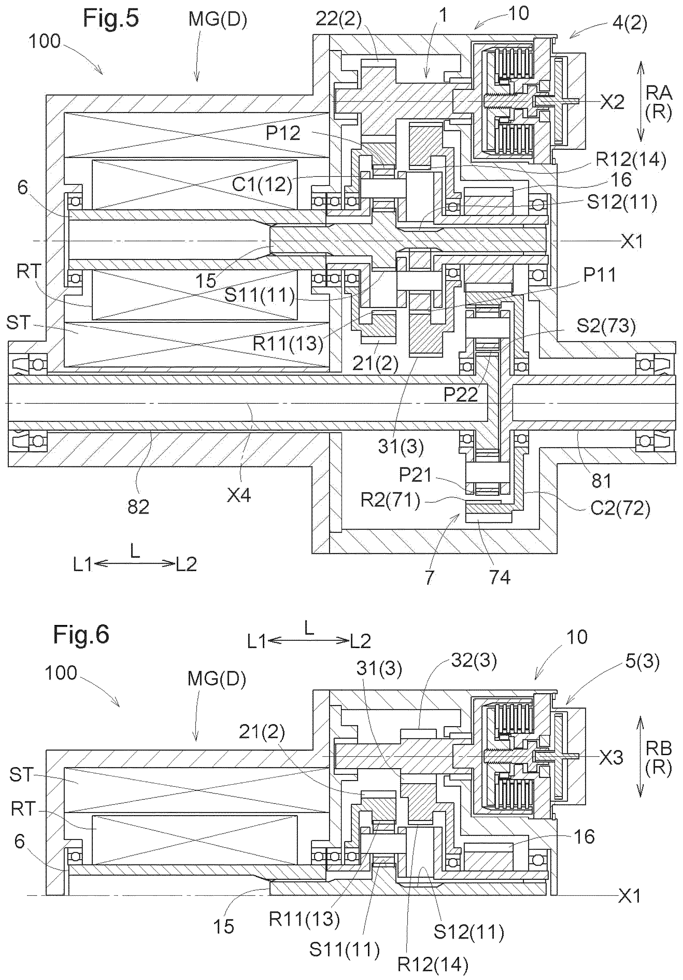

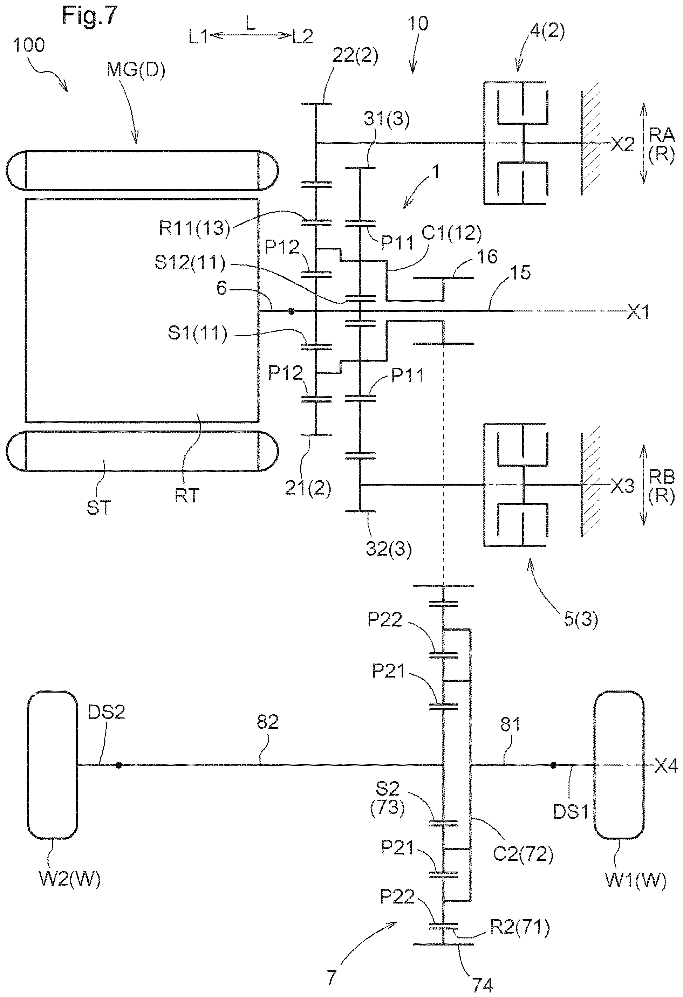

Hereinafter, a vehicle drive transmission device 100 according to a second embodiment will be described with reference to FIGS. 5 to 8. In the present embodiment, the vehicle drive transmission device 100 includes one transmission 10, and the position of the transmission 10 in the power transmission path connecting the drive source D to the first output member 81 and the second output member 82 is different from that in the first embodiment. The following description focuses on the differences from the first embodiment. Points that are not particularly described are the same as in the first embodiment.

As shown in FIGS. 5 to 7, in the present embodiment, the input element 11 of the transmission 10 includes a first sun gear S11 and a second sun gear S12 that rotate integrally with each other. The first sun gear S11 meshes with the small-diameter pinion gears P12. The second sun gear S12 meshes with the large-diameter pinion gears P11. The second sun gear S12 has a smaller diameter than the first sun gear S11. In the present embodiment, the large-diameter pinion gears P11 and the small-diameter pinion gears P12 are supported so as to be rotatable relative to each other. In the present embodiment, the second ring gear R12 that meshes with the large-diameter pinion gears P11 and the first ring gear R11 that meshes with the small-diameter pinion gears P12 have the same diameter. In the present embodiment, the first fixed gear 21 that rotates integrally with the first ring gear R11 has a smaller diameter than the second fixed gear 31 that rotates integrally with the second ring gear R12.

In the present embodiment, the input element 11 of the transmission 10 is connected to the rotor shaft 6 so as to rotate integrally with the rotor shaft 6. The first sun gear S11 and the second sun gear S12 that are the input element 11 are formed on an input shaft 15 connected to the rotor shaft 6 so as to rotate integrally with the rotor shaft 6. In the illustrated example, the second sun gear S12 is disposed on the second axial side L2 with respect to the first sun gear S11.

In the present embodiment, the output element 12 of the transmission 10 is connected to an externally toothed driving gear 16 so as to rotate integrally with the driving gear 16. The driving gear 16 is disposed on the first axis X1. In the present embodiment, the driving gear 16 is disposed on the second axial side L2 with respect to the planetary gear mechanism 1 of the transmission 10. The driving gear 16 is disposed on the outer side in the radial direction R with respect to the input shaft 15.

In the present embodiment, the differential gear mechanism 7 is not disposed on the first axis X1, but is disposed on a fourth axis X4 different from the first axis X1, the second axis X2, and the third axis X3.

In the present embodiment, the differential input element 71 of the differential gear mechanism 7 is connected to an externally toothed driven gear 74 that meshes with the driving gear 16 so as to rotate integrally with the driven gear 74. The driven gear 74 is disposed on the fourth axis X4. In the present embodiment, the driven gear 74 is disposed on the outer side in the radial direction R with respect to the differential ring gear R2 that is the differential input element 71, and is positioned to overlap the differential ring gear R2 in the radial view along the radial direction R.

In the present embodiment, the first differential output element 72 of the differential gear mechanism 7 is connected to the first output member 81 so as to rotate integrally with the first output member 81. The second differential output element 73 of the differential gear mechanism 7 is connected to the second output member 82 so as to rotate integrally with the second output member 82. In the example shown in FIG. 5, the first output member 81 is formed so as to extend from the differential carrier C2 that is the first differential output element 72 to the second axial side L2. The second output member 82 is formed so as to extend from the differential sun gear S2 that is the second differential output element 73 to the first axial side L1.

In this way, in the present embodiment, the differential gear mechanism 7 distributes, to the first differential output element 72 and the second differential output element 73, torque transmitted from the transmission 10 to the differential input element 71.

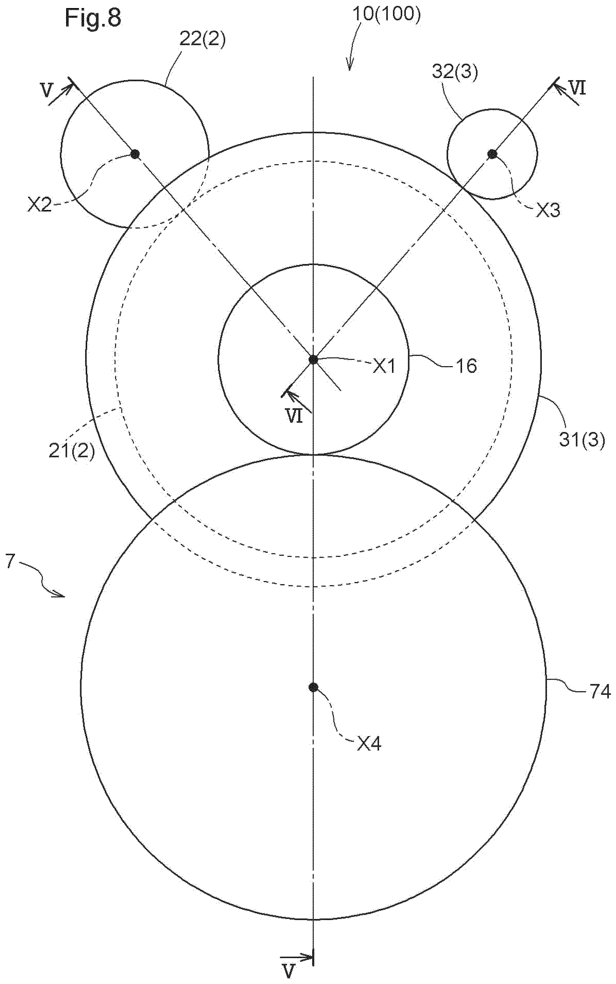

As shown in FIGS. 5 to 7, in the present embodiment, the first axis X1, the second axis X2, the third axis X3, and the fourth axis X4 are parallel to one another. As shown in FIG. 8, in the present embodiment, the second axis X2, the third axis X3, and the fourth axis X4 surround the first axis X1. Specifically, in the axial view along the axial direction L, the first axis X1 is in a triangle (in this case, an acute triangle) whose vertices are the second axis X2, the third axis X3, and the fourth axis X4.

As described above, in the present embodiment, the drive source D is the rotary electric machine MG including the rotor RT, the vehicle drive transmission device 100 includes: the rotor shaft 6 configured to rotate integrally with the rotor RT; the first output member 81 drivingly connected to the first wheel W1 that is the wheel W; the second output member 82 drivingly connected to the second wheel W2 that is the wheel W and is different from the first wheel W1; the transmission 10 described above; and the differential gear mechanism 7 including the differential input element 71, the first differential output element 72, and the second differential output element 73, and configured to distribute, to the first differential output element 72 and the second differential output element 73, torque transmitted from the transmission 10 to the differential input element 71, the input element 11 of the transmission 10 is connected to the rotor shaft 6 so as to rotate integrally with the rotor shaft 6, the output element 12 of the transmission 10 is connected to the externally toothed driving gear 16 so as to rotate integrally with the driving gear 16, the differential input element 71 is connected to the externally toothed driven gear 74 that meshes with the driving gear 16 so as to rotate integrally with the driven gear 74, the first differential output element 72 is connected to the first output member 81 so as to rotate integrally with the first output member 81, the second differential output element 73 is connected to the second output member 82 so as to rotate integrally with the second output member 82, and assuming that the first axis X1 is an axis on which the rotor shaft 6 and the planetary gear mechanism 1 of the transmission 10 are disposed, the second axis X2 is an axis on which the first fixing gear 22 of the transmission 10 is disposed, the third axis X3 is an axis on which the second fixing gear 32 of the transmission 10 is disposed, and the fourth axis X4 is an axis on which the differential gear mechanism 7 is disposed, the first axis X1, the second axis X2, the third axis X3, and the fourth axis X4 are parallel to one another, and the second axis X2, the third axis X3, and the fourth axis X4 surround the first axis X1.

In this configuration, in the configuration in which the planetary gear mechanism 1 of the transmission 10 is disposed coaxially with the rotor shaft 6 and the differential gear mechanism 7 is disposed on an axis different from that of the rotor shaft 6, the second axis X2 on which the first fixing gear 22 of the transmission 10 is disposed, the third axis X3 on which the second fixing gear 32 of the transmission 10 is disposed, and the fourth axis X4 on which the differential gear mechanism 7 is disposed surround the first axis X1 on which the rotor shaft 6 and the planetary gear mechanism 1 of the transmission 10 are disposed. Therefore, the dimension of the vehicle drive transmission device 100 in the radial direction R with respect to the first axis X1 can be reduced easily.

### 3. Third Embodiment

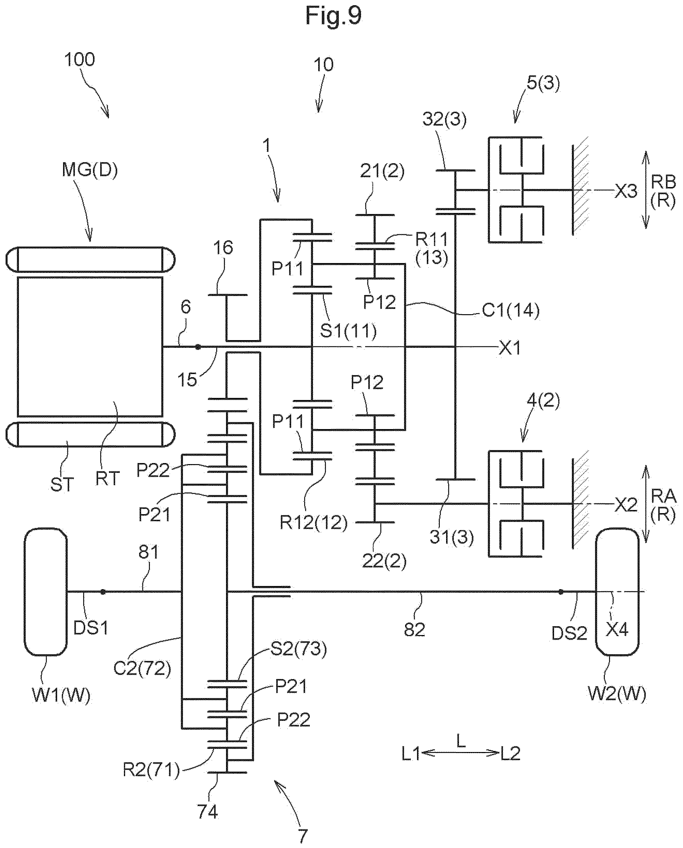

Hereinafter, a vehicle drive transmission device 100 according to a third embodiment will be described with reference to FIG. 9. In the present embodiment, the configuration of the transmission 10 is different from that in the second embodiment. The following description focuses on the differences from the second embodiment. Points that are not particularly described are the same as in the second embodiment.

As shown in FIG. 9, in the present embodiment, the input element 11 of the transmission 10 is the sun gear S1. The output element 12 of the transmission 10 is the second ring gear R12. The first stationary element 13 is the first ring gear R11. The second stationary element 14 is the carrier C1.

In the present embodiment, the carrier C1 rotatably supports the large-diameter pinion gears P11 and the small-diameter pinion gears P12 that rotate integrally with each other. The large-diameter pinion gear P11 meshes with both the sun gear S1 and the second ring gear R12. In the present embodiment, the large-diameter pinion gear P11 has a smaller diameter than the sun gear S1. The small-diameter pinion gear P12 meshes with the first ring gear R11.

In the present embodiment, the second fixed gear 31 is connected to the carrier C1 that is the second stationary element 14 so as to rotate integrally with the carrier C1. The second fixed gear 31 is disposed on the second axial side L2 with respect to the planetary gear mechanism 1.

In the present embodiment, the driving gear 16 is connected to the second ring gear R12 that is the output element 12 so as to rotate integrally with the second ring gear R12. The driving gear 16 is disposed on the first axial side L1 with respect to the planetary gear mechanism 1.

### 4. Other Embodiments

(1) The above embodiment illustrates the exemplary configuration in which the first pressing device 45 and the second pressing device 55 each convert the rotational driving force of the drive motor into a driving force in the axial direction L by the screw-type linear motion conversion mechanism and transmit the driving force to the pressing member. However, the present invention is not limited to such a configuration. For example, each of the first pressing device 45 and the second pressing device 55 may be configured to drive the pressing member by an electromagnetic actuator such as a solenoid. Alternatively, each of the first pressing device 45 and the second pressing device 55 may be configured to drive the pressing member by hydraulic pressure.
(2) The above embodiment illustrates the exemplary configuration in which the first support member 43 of the first friction engagement device 4 supports the outer circumferential portions of the first friction members 41 and the second support member 44 supports the inner circumferential portions of the second friction members 42. However, the present invention is not limited to such a configuration. The first support member 43 may support the inner circumferential portions of the first friction members 41 and the second support member 44 may support the outer circumferential portions of the second friction members 42. The above embodiment illustrates the exemplary configuration in which the third support member 53 of the second friction engagement device 5 supports the outer circumferential portions of the third friction members 51 and the fourth support member 54 supports the inner circumferential portions of the fourth friction members 52. However, the present invention is not limited to such a configuration. The third support member 53 may support the inner circumferential portions of the third friction members 51 and the fourth support member 54 may support the outer circumferential portions of the fourth friction members 52.
(3) The above embodiment illustrates the exemplary configuration in which the first fixed gear 21 is the externally toothed gear provided on the outer circumferential surface of the first annular portion A11. However, the present invention is not limited to such a configuration. For example, the first fixed gear 21 may be an internally toothed gear provided on the inner circumferential surface of an annular portion different from the first annular portion A11. In this configuration, it is preferable to provide a member for connecting the annular portion on which the first fixed gear 21 is provided and the first annular portion A11 on which the first ring gear R11 is provided.
(4) The above embodiment illustrates the exemplary configuration in which the differential gear mechanism 7 is the double-pinion type planetary gear mechanism. However, the present invention is not limited to such a configuration. For example, the differential gear mechanism 7 may be a Ravigneaux type planetary gear mechanism. Alternatively, the differential gear mechanism 7 may be a bevel gear type differential gear mechanism instead of the planetary gear type differential gear mechanism.
(5) The configurations disclosed in the above embodiments can be applied in combination with the configurations disclosed in other embodiments as long as there is no contradiction. Regarding the other configurations, the embodiments disclosed herein are merely illustrative in all respects. Therefore, various modifications can be made as appropriate without departing from the spirit of the present disclosure.

### [Summary of Embodiment]

Hereinafter, the summary of the transmission (10) and the vehicle drive transmission device (100) described above will be provided.

The transmission (10) includes: a planetary gear mechanism (1) including an input element (11) drivingly connected to a drive source (D) for a wheel (W), an output element (12) drivingly connected to the wheel (W), a first stationary element (13), and a second stationary element (14); a first fixing device (2) configured to selectively fix the first stationary element (13) to a non-rotary member (NR); and a second fixing device (3) configured to selectively fix the second stationary element (14) to the non-rotary member (NR), in which the first fixing device (2) includes a first fixed gear (21) connected to the first stationary element (13) so as to rotate integrally with the first stationary element (13), a first fixing gear (22) that meshes with the first fixed gear (21), and a first friction engagement device (4) configured to selectively engage the first fixing gear (22) with the non-rotary member (NR), the second fixing device (3) includes a second fixed gear (31) connected to the second stationary element (14) so as to rotate integrally with the second stationary element (14), a second fixing gear (32) that meshes with the second fixed gear (31), and a second friction engagement device (5) configured to selectively engage the second fixing gear (32) with the non-rotary member (NR), the first friction engagement device (4) is disposed coaxially with the first fixing gear (22), the second friction engagement device (5) is disposed coaxially with the second fixing gear (32), a rotation axis of the first fixing gear (22) and a rotation axis of the second fixing gear (32) are parallel to each other, and assuming that an axial direction (L) is a direction along the rotation axis of the first fixing gear (22) and the rotation axis of the second fixing gear (32), the first friction engagement device (4) and the second friction engagement device (5) are disposed so as not to overlap each other in an axial view along the axial direction (L).

In this configuration, the first fixing device (2) includes the first fixed gear (21) connected to the first stationary element (13) of the planetary gear mechanism (1) so as to rotate integrally with the first stationary element (13), the first fixing gear (22) that meshes with the first fixed gear (21), and the first friction engagement device (4) configured to selectively engage the first fixing gear (22) with the non-rotary member (NR). The first friction engagement device (4) is disposed coaxially with the first fixing gear (22). The second fixing device (3) includes the second fixed gear (31) connected to the second stationary element (14) of the planetary gear mechanism (1) so as to rotate integrally with the second stationary element (14), the second fixing gear (32) that meshes with the second fixed gear (31), and the second friction engagement device (5) configured to selectively engage the second fixing gear (32) with the non-rotary member (NR). The second friction engagement device (5) is disposed coaxially with the second fixing gear (32). Therefore, the first friction engagement device (4) and the second friction engagement device (5) can easily be disposed on different axes. Thus, the dimension of the transmission (10) in the axial direction (L) can easily be reduced compared to a configuration in which they are disposed coaxially. In this configuration, the diameter of the first fixing gear (22) is set smaller than that of the first fixed gear (21) in the first fixing device (2). Therefore, it is possible to reduce torque required to fix the first stationary element (13) of the planetary gear mechanism (1) to the non-rotary member (NR). Thus, the diameter of the first friction engagement device (4) can be reduced easily. Similarly, in the second fixing device (3), the diameter of the second friction engagement device (5) can be reduced easily.
As described above, with this configuration, the transmission (10) can easily be downsized in the configuration including the pair of friction engagement devices (4, 5).

It is preferable that the first friction engagement device (4) include a first friction member (41) disposed coaxially with the first fixing gear (22), a second friction member (42) disposed coaxially with the first fixing gear (22) so as to face the first friction member (41) in the axial direction (L), a first support member (43) connected to the first fixing gear (22) so as to rotate integrally with the first fixing gear (22) and supporting the first friction member (41) in a state in which relative rotation of the first friction member (41) is restricted, a second support member (44) fixed to the non-rotary member (NR) and supporting the second friction member (42) in a state in which relative rotation of the second friction member (42) is restricted, and a first pressing device (45) configured to press the first friction member (41) and the second friction member (42) in the axial direction (L), the second friction engagement device (5) include a third friction member (51) disposed coaxially with the second fixing gear (32), a fourth friction member (52) disposed coaxially with the second fixing gear (32) so as to face the third friction member (51) in the axial direction (L), a third support member (53) connected to the second fixing gear (32) so as to rotate integrally with the second fixing gear (32) and supporting the third friction member (51) in a state in which relative rotation of the third friction member (51) is restricted, a fourth support member (54) fixed to the non-rotary member (NR) and supporting the fourth friction member (52) in a state in which relative rotation of the fourth friction member (52) is restricted, and a second pressing device (55) configured to press the third friction member (51) and the fourth friction member (52) in the axial direction (L), assuming that a first radial direction (RA) is a direction orthogonal to the rotation axis of the first fixing gear (22) and a second radial direction (RB) is a direction orthogonal to the rotation axis of the second fixing gear (32), the first pressing device (45) include a first pressing member (46) configured to apply a pressing force to the first friction member (41) and the second friction member (42), a first drive motor (47), and a screw-type first linear motion conversion mechanism (48) configured to convert a rotational driving force of the first drive motor (47) into a driving force in the axial direction (L) and transmit the driving force to the first pressing member (46), the first linear motion conversion mechanism (48) be disposed on an inner side in the first radial direction (RA) with respect to the first friction member (41) and the second friction member (42), and be positioned to overlap the first friction member (41) and the second friction member (42) in a first radial view along the first radial direction (RA), the second pressing device (55) include a second pressing member (56) configured to apply a pressing force to the third friction member (51) and the fourth friction member (52), a second drive motor (57), and a screw-type second linear motion conversion mechanism (58) configured to convert a rotational driving force of the second drive motor (57) into a driving force in the axial direction (L) and transmit the driving force to the second pressing member (56), and the second linear motion conversion mechanism (58) be disposed on an inner side in the second radial direction (RB) with respect to the third friction member (51) and the fourth friction member (52), and be positioned to overlap the third friction member (51) and the fourth friction member (52) in a second radial view along the second radial direction (RB).

In this configuration, the first friction engagement device (4) includes the first friction member (41), the second friction member (42), and the first support member (43) that are disposed coaxially with the first fixing gear (22). Therefore, the dimension of the first friction engagement device (4) in the radial direction (R) can easily be reduced compared to a configuration in which the first friction member (41), the second friction member (42), and the first support member (43) are disposed coaxially with the first stationary element (13) of the planetary gear mechanism (1). Similarly, in the second fixing device (3), the dimension of the second friction engagement device (5) in the radial direction (R) can easily be reduced compared to a configuration in which the third friction member (51), the fourth friction member (52), and the third support member (53) are disposed coaxially with the second stationary element (14) of the planetary gear mechanism (1). In this configuration, the first linear motion conversion mechanism (48) of the first pressing device (45) is disposed using the space on the inner side in the first radial direction (RA) with respect to the first friction member (41) and the second friction member (42), and the second linear motion conversion mechanism (58) of the second pressing device (55) is disposed using the space on the inner side in the second radial direction (RB) with respect to the third friction member (51) and the fourth friction member (52). Therefore, the first friction engagement device (4) including the first pressing device (45) and the second friction engagement device (5) including the second pressing device (55) can be downsized easily, and furthermore, the transmission (10) can be downsized easily.
In this configuration, the first pressing member (46) operates in the axial direction (L) by the screw-type first linear motion conversion mechanism (48), and the second pressing member (56) operates in the axial direction (L) by the screw-type second linear motion conversion mechanism (58). Therefore, the positions of the first pressing member (46) and the second pressing member (56) can be maintained even when there is no driving force from the first drive motor (47) and the second drive motor (57). Thus, even when no electric power is supplied to the transmission (10), both the first friction engagement device (4) and the second friction engagement device (5) can be engaged, and the output element (12) of the planetary gear mechanism (1) can be locked so as not to rotate. This eliminates the need to provide a separate parking brake.

It is preferable that the drive source (D) be a rotary electric machine (MG) including a rotor (RT), the vehicle drive transmission device (100) include: a rotor shaft (6) configured to rotate integrally with the rotor (RT); a first output member (81) drivingly connected to a first wheel (W1) that is the wheel (W); a second output member (82) drivingly connected to a second wheel (W2) that is the wheel (W) and is different from the first wheel (W1); a differential gear mechanism (7) including a differential input element (71) connected to the rotor shaft (6) so as to rotate integrally with the rotor shaft (6), a first differential output element (72), and a second differential output element (73) , and configured to distribute, to the first differential output element (72) and the second differential output element (73), torque transmitted from the rotor shaft (6) to the differential input element (71); a first transmission (10A) that is the transmission (10) described above; and a second transmission (10B) that is the transmission (10) described above and is different from the first transmission (10A), the input element (11) of the first transmission (10A) be connected to the first differential output element (72) so as to rotate integrally with the first differential output element (72), the output element (12) of the first transmission (10A) be connected to the first output member (81) so as to rotate integrally with the first output member (81), the input element (11) of the second transmission (10B) be connected to the second differential output element (73) so as to rotate integrally with the second differential output element (73), the output element (12) of the second transmission (10B) be connected to the second output member (82) so as to rotate integrally with the second output member (82), the first fixed gear (21) of the first transmission (10A) and the first fixed gear (21) of the second transmission (10B) be disposed coaxially, the first fixing gear (22) of the first transmission (10A) and the first fixing gear (22) of the second transmission (10B) be disposed coaxially and connected to each other so as to rotate integrally with each other, the second fixed gear (31) of the first transmission (10A) and the second fixed gear (31) of the second transmission (10B) be disposed coaxially, the second fixing gear (32) of the first transmission (10A) and the second fixing gear (32) of the second transmission (10B) be disposed coaxially and connected to each other so as to rotate integrally with each other, the first friction engagement device (4) of the first transmission (10A) and the first friction engagement device (4) of the second transmission (10B) be common to each other, and the second friction engagement device (5) of the first transmission (10A) and the second friction engagement device (5) of the second transmission (10B) be common to each other.

In this configuration, in the configuration in which the transmissions (10) are provided in the power transmission path connecting the differential gear mechanism (7) and the first output member (81) and the power transmission path connecting the differential gear mechanism (7) and the second output member (82), the first fixing gears (22) constituting the first fixing devices (2) of the pair of transmissions (10) are disposed coaxially and connected to each other so as to rotate integrally with each other. The second fixing gears (32) constituting the second fixing devices (3) of the pair of transmissions (10) are disposed coaxially and connected to each other so as to rotate integrally with each other. Therefore, the pair of first fixing gears (22) can selectively be engaged with the non-rotary member (NR) by the single first friction engagement device (4), and the pair of second fixing gears (32) can selectively be engaged with the non-rotary member (NR) by the single second friction engagement device (5). Thus, the pair of first fixing devices (2) and the pair of second fixing devices (3) can be downsized easily, and furthermore, the vehicle drive transmission device (100) can be downsized easily in the configuration including the pair of transmissions (10).

It is preferable that the drive source (D) be a rotary electric machine (MG) including a rotor (RT), the vehicle drive transmission device (100) include: a rotor shaft (6) configured to rotate integrally with the rotor (RT); a first output member (81) drivingly connected to a first wheel (W1) that is the wheel (W); a second output member (82) drivingly connected to a second wheel (W2) that is the wheel (W) and is different from the first wheel (W1); the transmission (10) described above; and a differential gear mechanism (7) including a differential input element (71), a first differential output element (72), and a second differential output element (73), and configured to distribute, to the first differential output element (72) and the second differential output element (73), torque transmitted from the transmission (10) to the differential input element (71), the input element (11) of the transmission (10) be connected to the rotor shaft (6) so as to rotate integrally with the rotor shaft (6), the output element (12) of the transmission (10) be connected to an externally toothed driving gear (16) so as to rotate integrally with the driving gear (16), the differential input element (71) be connected to an externally toothed driven gear (74) that meshes with the driving gear (16) so as to rotate integrally with the driven gear (74), the first differential output element (72) be connected to the first output member (81) so as to rotate integrally with the first output member (81), the second differential output element (73) be connected to the second output member (82) so as to rotate integrally with the second output member (82), and assuming that a first axis (X1) is an axis on which the rotor shaft (6) and the planetary gear mechanism (1) of the transmission (10) are disposed, a second axis (X2) is an axis on which the first fixing gear (22) of the transmission (10) is disposed, a third axis (X3) is an axis on which the second fixing gear (32) of the transmission (10) is disposed, and a fourth axis (X4) is an axis on which the differential gear mechanism (7) is disposed, the first axis (X1), the second axis (X2), the third axis (X3), and the fourth axis (X4) be parallel to one another, and the second axis (X2), the third axis (X3), and the fourth axis (X4) surround the first axis (X1).

In this configuration, in the configuration in which the planetary gear mechanism (1) of the transmission (10) is disposed coaxially with the rotor shaft (6) and the differential gear mechanism (7) is disposed on an axis different from that of the rotor shaft (6), the second axis (X2) on which the first fixing gear (22) of the transmission (10) is disposed, the third axis (X3) on which the second fixing gear (32) of the transmission (10) is disposed, and the fourth axis (X4) on which the differential gear mechanism (7) is disposed surround the first axis (X1) on which the rotor shaft (6) and the planetary gear mechanism (1) of the transmission (10) are disposed. Therefore, the dimension of the vehicle drive transmission device (100) in the radial direction (R) with respect to the first axis (X1) can be reduced easily.

### INDUSTRIAL APPLICABILITY

The technology disclosed herein is applicable to a transmission including a planetary gear mechanism including an input element drivingly connected to a drive source for a wheel, an output element drivingly connected to the wheel, a first stationary element, and a second stationary element, a first fixing device that selectively fixes the first stationary element to a non-rotary member, and a second fixing device that selectively fixes the second stationary element to the non-rotary member, and a vehicle drive transmission device including the transmission.

### Description of the Reference Numerals

100: vehicle drive transmission device, 10: transmission, 10A: first transmission, 10B: second transmission, 1: planetary gear mechanism, 11: input element, 12: output element, 13: first stationary element, 14: second stationary element, 16: driving gear, 2: first fixing device, 21: first fixed gear, 22: first fixing gear, 3: second fixing device, 31: second fixed gear, 32: second fixing gear, 4: first friction engagement device, 41: first friction member, 42: second friction member, 43: first support member, 44: second support member, 45: first pressing device, 46: first pressing member, 47: first drive motor, 48: first linear motion conversion mechanism, 5: second friction engagement device, 51: third friction member, 52: fourth friction member, 53: third support member, 54: fourth support member, 55: second pressing device, 56: second pressing member, 57: second drive motor, 58: second linear motion conversion mechanism, 6: rotor shaft, 7: differential gear mechanism, 71: differential input element, 72: first differential output element, 73: second differential output element, 74: driven gear, 81: first output member, 82: second output member, D: drive source, MG: rotary electric machine, ST: stator, RT: rotor, A11: first annular portion, A12: second annular portion, R11: first ring gear, R12: second ring gear, NR: non-rotary member, W: wheel, W1: first wheel, W2: second wheel, L: axial direction, RA: first radial direction, RB: second radial direction, X1: first axis, X2: second axis, X3: third axis, X4: fourth axis

## Claims

1. A transmission comprising:
a planetary gear mechanism including an input element drivingly connected to a drive source for a wheel, an output element drivingly connected to the wheel, a first stationary element, and a second stationary element;
a first fixing device configured to selectively fix the first stationary element to a non-rotary member; and
a second fixing device configured to selectively fix the second stationary element to the non-rotary member, wherein
the first fixing device includes a first fixed gear connected to the first stationary element so as to rotate integrally with the first stationary element, a first fixing gear that meshes with the first fixed gear, and a first friction engagement device configured to selectively engage the first fixing gear with the non-rotary member,
the second fixing device includes a second fixed gear connected to the second stationary element so as to rotate integrally with the second stationary element, a second fixing gear that meshes with the second fixed gear, and a second friction engagement device configured to selectively engage the second fixing gear with the non-rotary member,
the first friction engagement device is disposed coaxially with the first fixing gear,
the second friction engagement device is disposed coaxially with the second fixing gear,
a rotation axis of the first fixing gear and a rotation axis of the second fixing gear are parallel to each other, and
assuming that an axial direction is a direction along the rotation axis of the first fixing gear and the rotation axis of the second fixing gear,
the first friction engagement device and the second friction engagement device are disposed so as not to overlap each other in an axial view along the axial direction.

2. The transmission according to claim 1, wherein
the first friction engagement device includes a first friction member disposed coaxially with the first fixing gear, a second friction member disposed coaxially with the first fixing gear so as to face the first friction member in the axial direction, a first support member connected to the first fixing gear so as to rotate integrally with the first fixing gear and supporting the first friction member in a state in which relative rotation of the first friction member is restricted, a second support member fixed to the non-rotary member and supporting the second friction member in a state in which relative rotation of the second friction member is restricted, and a first pressing device configured to press the first friction member and the second friction member in the axial direction,
the second friction engagement device includes a third friction member disposed coaxially with the second fixing gear, a fourth friction member disposed coaxially with the second fixing gear so as to face the third friction member in the axial direction, a third support member connected to the second fixing gear so as to rotate integrally with the second fixing gear and supporting the third friction member in a state in which relative rotation of the third friction member is restricted, a fourth support member fixed to the non-rotary member and supporting the fourth friction member in a state in which relative rotation of the fourth friction member is restricted, and a second pressing device configured to press the third friction member and the fourth friction member in the axial direction,
assuming that a first radial direction is a direction orthogonal to the rotation axis of the first fixing gear and a second radial direction is a direction orthogonal to the rotation axis of the second fixing gear,
the first pressing device includes a first pressing member configured to apply a pressing force to the first friction member and the second friction member, a first drive motor, and a screw-type first linear motion conversion mechanism configured to convert a rotational driving force of the first drive motor into a driving force in the axial direction and transmit the driving force to the first pressing member,
the first linear motion conversion mechanism is disposed on an inner side in the first radial direction with respect to the first friction member and the second friction member, and is positioned to overlap the first friction member and the second friction member in a first radial view along the first radial direction,
the second pressing device includes a second pressing member configured to apply a pressing force to the third friction member and the fourth friction member, a second drive motor, and a screw-type second linear motion conversion mechanism configured to convert a rotational driving force of the second drive motor into a driving force in the axial direction and transmit the driving force to the second pressing member, and
the second linear motion conversion mechanism is disposed on an inner side in the second radial direction with respect to the third friction member and the fourth friction member, and is positioned to overlap the third friction member and the fourth friction member in a second radial view along the second radial direction.

3. A vehicle drive transmission device in which the drive source is a rotary electric machine including a rotor, the vehicle drive transmission device comprising:
a rotor shaft configured to rotate integrally with the rotor;
a first output member drivingly connected to a first wheel that is the wheel;
a second output member drivingly connected to a second wheel that is the wheel and is different from the first wheel;
a differential gear mechanism including a differential input element connected to the rotor shaft so as to rotate integrally with the rotor shaft, a first differential output element, and a second differential output element, and configured to distribute, to the first differential output element and the second differential output element, torque transmitted from the rotor shaft to the differential input element;
a first transmission that is the transmission according to claim 1; and
a second transmission that is the transmission according to claim 1 and is different from the first transmission, wherein
the input element of the first transmission is connected to the first differential output element so as to rotate integrally with the first differential output element,
the output element of the first transmission is connected to the first output member so as to rotate integrally with the first output member,
the input element of the second transmission is connected to the second differential output element so as to rotate integrally with the second differential output element,
the output element of the second transmission is connected to the second output member so as to rotate integrally with the second output member,
the first fixed gear of the first transmission and the first fixed gear of the second transmission are disposed coaxially,
the first fixing gear of the first transmission and the first fixing gear of the second transmission are disposed coaxially and connected to each other so as to rotate integrally with each other,
the second fixed gear of the first transmission and the second fixed gear of the second transmission are disposed coaxially,
the second fixing gear of the first transmission and the second fixing gear of the second transmission are disposed coaxially and connected to each other so as to rotate integrally with each other,
the first friction engagement device of the first transmission and the first friction engagement device of the second transmission are common to each other, and
the second friction engagement device of the first transmission and the second friction engagement device of the second transmission are common to each other.

4. A vehicle drive transmission device in which the drive source is a rotary electric machine including a rotor, the vehicle drive transmission device comprising:
a rotor shaft configured to rotate integrally with the rotor;
a first output member drivingly connected to a first wheel that is the wheel;
a second output member drivingly connected to a second wheel that is the wheel and is different from the first wheel;
the transmission according to claim 1; and
a differential gear mechanism including a differential input element, a first differential output element, and a second differential output element, and configured to distribute, to the first differential output element and the second differential output element, torque transmitted from the transmission to the differential input element, wherein
the input element of the transmission is connected to the rotor shaft so as to rotate integrally with the rotor shaft,
the output element of the transmission is connected to an externally toothed driving gear so as to rotate integrally with the driving gear,
the differential input element is connected to an externally toothed driven gear that meshes with the driving gear so as to rotate integrally with the driven gear,
the first differential output element is connected to the first output member so as to rotate integrally with the first output member,
the second differential output element is connected to the second output member so as to rotate integrally with the second output member, and
assuming that a first axis is an axis on which the rotor shaft and the planetary gear mechanism of the transmission are disposed, a second axis is an axis on which the first fixing gear of the transmission is disposed, a third axis is an axis on which the second fixing gear of the transmission is disposed, and a fourth axis is an axis on which the differential gear mechanism is disposed,
the first axis, the second axis, the third axis, and the fourth axis are parallel to one another, and
the second axis, the third axis, and the fourth axis surround the first axis.
